(19) Europäisches Patentamt
European Patent Office
Office européen des brevets

(11) EP 2 612 203 B1

(12) **EUROPEAN PATENT SPECIFICATION**

(45) Date of publication and mention of the grant of the patent:
**07.03.2018 Bulletin 2018/10**

(21) Application number: **11821628.2**

(22) Date of filing: **18.08.2011**

(51) Int Cl.:
***G03G 9/08*** *(2006.01)* ***B65D 83/06*** *(2006.01)*
***C08G 63/91*** *(2006.01)* ***G03G 9/087*** *(2006.01)*

(86) International application number:
**PCT/JP2011/069094**

(87) International publication number:
**WO 2012/029611 (08.03.2012 Gazette 2012/10)**

(54) **TONER, METHOD FOR PRODUCING THE TONER, AND IMAGE FORMING METHOD**

TONER, VERFAHREN ZUR HERSTELLUNG DES TONERS UND BILDHERSTELLUNGSVERFAHREN

TONER, PROCÉDÉ DE PRODUCTION DU TONER ET PROCÉDÉ DE FORMATION D'IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.07.2011 JP 2011164467**
**31.08.2010 JP 2010194185**

(43) Date of publication of application:
**10.07.2013 Bulletin 2013/28**

(73) Proprietor: **Ricoh Company, Limited**
**Tokyo 143-8555 (JP)**

(72) Inventors:
- **YAMASHITA, Hiroshi**
  **Tokyo 143-8555 (JP)**
- **SHIRASU, Yuichi**
  **Tokyo 143-8555 (JP)**
- **MURAYAMA, Tomoki**
  **Shibata-gun**
  **Miyagi 989-1695 (JP)**
- **WATANABE, Masaki**
  **Tokyo 143-8555 (JP)**

(74) Representative: **Held, Stephan**
**Meissner Bolte Patentanwälte**
**Rechtsanwälte Partnerschaft mbB**
**Widenmayerstraße 47**
**80538 München (DE)**

(56) References cited:
**EP-A2- 1 223 474**
**EP-A2- 1 813 992**
**JP-A- 11 237 759**
**JP-A- 2001 013 732**
**JP-A- 2002 023 424**
**JP-A- 2002 023 424**
**JP-A- 2002 212 142**
**JP-A- 2005 215 255**
**JP-A- 2006 030 685**
**JP-A- 2009 020 269**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Technical Field

The present invention relates to a toner, a method for producing the toner, and an image forming method.

Background Art

Developers used in, for example, electrophotography, electrostatic recording and electrostatic printing adhere, in a developing step, to an image bearing member on which an electrostatic image has been formed; then, in a transfer step, are transferred from the image bearing member onto a recording medium (e.g., a recording paper sheet); and then, in a fixing step, are fixed on the surface of the recording medium. As have been known, such developers that develop an electrostatic image formed on the image bearing member are roughly classified into two-component developers formed of a carrier and a toner and one-component developers requiring no carrier (magnetic or non-magnetic toners).
Conventionally, dry toners used in electrophotography, electrostatic recording, electrostatic printing, etc. have been produced by finely pulverizing a melt-kneaded product of a toner binder (e.g., a styrene resin and a polyester) and a colorant.
To obtain high-quality, high-definition images, improvements have been made by making smaller the particle diameter of toner particles. However, toner particles obtained by commonly-used production methods using a kneading, pulverizing method are amorphous. Thus, the following unfavorable phenomena occur: ultra-fine particles are formed through further pulverization of the toner particles due to stirring with carrier in a developing device or, when the toner is used as a one-component developer, due to contact stress with a developing roller, a toner-supplying roller, a layer thickness-regulating blade, a frictional charging blade, etc.; and the image quality decreases due to a fluidizing agent being embedded in the toner surface. In addition, due to their amorphous shapes, the flowability of the toner particles as powder becomes poor, which requires a large amount of the fluidizing agent and also, the filling rate of a toner bottle with the toner particles is low, which is an obstacle to downsizing. Therefore, at present, such toner particles having a small particle diameter have not shown their advantages. That is, there is a limit to the particle diameter which can be made small by the pulverizing method, and the pulverizing method cannot produce toner particles having smaller particle diameters. Furthermore, poor transferability due to amorphous shapes of pulverized toner particles causes image loss in the transferred image and also, requires a large amount of toner consumed for compensating the image loss.
In view of this, there has been increased demand for further increasing transfer efficiency to obtain high-quality images having no image loss and decreasing the amount of the consumed toner to reduce running cost. In other words, when transfer efficiency is quite high, it is not necessary to use a cleaning unit for removing untransferred toner from the image bearing member and the recording medium. As a result, the following advantages are also obtained: downsizing of the apparatus; cost reduction; and no waste of toner.
Various production methods for spherical toners have been proposed for solving the problems caused by such amorphous shapes. However, spherical toner particles expose their surfaces outward in all directions, and are easily brought into contact with a carrier and a charging member such as a charging blade. As a result, the spherical toner particles are degraded over time in chargeability due to contamination, the background portion is stained with the toner, and toner scattering occurs.
As a method for solving these problems, PTL 1 proposes a method including: dispersing or dissolving toner materials in a volatile solvent such as a low-boiling-point organic solvent; emulsifying or forming liquid droplets of the resultant dispersion liquid or solution in an aqueous medium in the presence of a dispersing agent; and removing the volatile solvent to produce a toner. This proposed technique produces a toner by a so-called polymer dissolution suspension method involving volume shrinkage. The volume of the liquid droplets is shrunk in removing the volatile solvent. When using as the dispersing agent a solid fine particle dispersing agent which is not dissolvable in an aqueous medium, only amorphous particles are produced, which is problematic. Also, when increasing the solid content of the solvent to increase productivity, the dispersion phase is increased in viscosity, resulting in that the obtained particles have large particle diameters, the distribution of which is also broad. In contrast, when decreasing the molecular weight of a resin used to decrease the viscosity of the dispersion phase, fixability (especially, hot offset resistance) cannot be maintained satisfactory.
Also, PTL 2 proposes a method including: dissolving or dispersing toner materials in an organic solvent; emulsifying or dispersing the resultant mixture in an aqueous medium for aggregation; and removing the organic solvent to form a toner as well as a method including: melt-kneading toner materials; dissolving or dispersing the melt-kneaded product in an organic solvent; emulsifying or dispersing the resultant solution or dispersion liquid in an aqueous medium; and removing the organic solvent to form a toner. This proposed technique can prevent phase separation of resin, improve dispersibility of toner components, and prevent reaggregation and segregation of resin inside toner particles,

and can produce a toner exhibiting proper chargeability and releaseability. However, this technique cannot satisfactorily prevent contamination against a carrier and a charging member such as a charging blade.

Also, PTL 3 proposes a method including: allowing an active hydrogen group-containing prepolymer and a compound having in the molecule two or more functional groups reactive with an active hydrogen group to react in an aqueous medium to form toner particles. This proposed technique uses a low-molecular-weight resin in the polymer dissolution suspension method to decrease the viscosity of the dispersion phase for facilitating emulsification, as well as performs polymerization reaction in particles to improve the fixability thereof. This proposed technique, however, does not sufficiently takes into consideration contamination of the toner against a charging member and the like. For example, this technique does not control the shape of particles to prevent contamination against a carrier and a charging member such as a charging blade.

Also, PTL 4 proposes a toner containing a polyester, a colorant, a releasing agent, and a fatty acid amide compound serving as a fixing aid. This literature describes that the toner produced by this proposed technique is excellent in low temperature fixability and offset resistance at high temperatures, and also prevents contamination against a fixing device and an image. However, it cannot be stated that the toner has satisfactory properties.

Also, PTL 5 proposes an electrostatic developing toner including a binder resin containing an ester wax, which contains ester compounds which are the same in the number of carbon atoms (i.e., the most ester compound contained is only one ester compound) in an amount of 50% by mass to 95% by mass, in order to improve hot offset resistance, low temperature fixability and anti-blocking property, as well as obtain good transparency in OHP. This proposed electrostatic developing toner contains a large amount of ester compounds having the same number of carbon atoms and thus, has a sharp melting point and has excellent fixability at a specific temperature. However, it is difficult for this electrostatic developing toner to respond to variation in fixing temperature in apparatus such as an electrophotographic apparatus. In addition, the electrostatic developing toner is hardly made to be a toner having low temperature fixability. Furthermore, the electrostatic developing toner is not satisfactory in terms of transfer efficiency and contamination in the apparatus, which is problematic.

In order to reduce power consumption, the melt temperature of a toner has been decreasing. As a result, a releasing agent used must be sharply melted at a low temperature. For reducing power consumption, the following measures are effective: increasing the heat-capacity of a heating medium (e.g., a roller or belt) to shorten the warm-up time thereof; and decreasing the surface temperature of a heating medium (e.g., a roller or belt) during fixing. However, the shorter the warm-up time, the larger the variation in temperature of the heating medium when the power is on. Also, maintaining the temperature of the heating medium at a specific low temperature easily leads to greater variation in temperature during continuous paper feeding. Therefore, it is necessary to respond to variation in fixing temperature; i.e., to attain a wide fixing temperature range.

In view of this, at present, demand has arisen for provision of a toner having excellent low temperature fixability, wide fixing temperature range, excellent releaseability even at high fixing temperatures, excellent transfer efficiency, and less contamination in the apparatus; a method for producing the toner; and an image forming method.

Citation List

Patent Literature

PTL 1: Japanese Patent Application Laid-Open (JP-A) No. 07-152202
PTL 2: Japanese Patent (JP-B) No. 4284005
PTL 3: JP-A No. 11-149179
PTL 4: JP-A No. 2010-2901
PTL 5: JP-B No. 3287733


EP 1813992 A2 relates to a toner comprising at least a binder resin and a releasing agent, wherein the releasing agent may be a mixture of monoester compounds of formula $R^1$-COO-$R^2$, wherein $R^1$ and $R^2$ being each independently a hydrocarbon group having 13 to 30 carbon atoms.

JP 2005-215255 A describes a toner containing a resin and a colorant and optionally a lubricant. In an example a mixture of stearyl stearate, behenyl stearate, stearyl behenate and behenyl behenate is used as lubricant.

JP 2002-023424 A is concerned with a color toner containing at least a binder resin which contains a polyester resin, a hybrid resin having polyester unit or a mixture thereof, a coloring agent, an organic metal compound and an ester wax. The ester wax may be a mixture of monoester compounds of formula $R^1$-COO-$R^2$, wherein $R^1$ and $R^2$ being each independently an alkyl group having 15 to 45 carbon atoms with a different total carbon number.

EP 1223474 A2 relates to ester wax made of a saturated linear monocarboxylic acid having 14 to 30 carbon

atoms and a saturated linear monohydric alcohol having 14 to 30 carbon atoms.

Summary of Invention

Technical Problem

The present invention aims to solve the above-described existing problems and to achieve the following objects. Specifically, an object of the present invention is to provide: a toner having excellent low temperature fixability, wide fixing temperature range, excellent releaseability even at high fixing temperatures, excellent transfer efficiency, and less contamination in the apparatus; a method for producing the toner; and an image forming method.

Solution to Problem

The present inventors conducted extensive studies to solve the above-described problems, and have found that a toner including a binder resin containing an ester bond and a releasing agent, wherein the releasing agent includes a first C30-C50 alkyl monoester compound and a second C30-C50 alkyl monoester compound, wherein the number of carbon atoms of the first C30-C50 alkyl monoester compound is different from the number of carbon atoms of the second C30-C50 alkyl monoester compound, wherein the amount of the first C30-C50 alkyl monoester compound is the largest and the amount of the second C30-C50 alkyl monoester compound is the second largest or the same as the amount of the first C30-C50 alkyl monoester compound, wherein the amount of the first C30-C50 alkyl monoester compound is 30% by mass or more but less than 50% by mass with respect to the releasing agent, and wherein the amount of the second C30-C50 alkyl monoester compound is 10% by mass or more but less than 50% by mass with respect to the releasing agent, has excellent low temperature fixability, wide fixing temperature range, excellent releaseability even at high fixing temperatures, excellent transfer efficiency, and less contamination in the apparatus. The present invention has been accomplished on the basis of this finding.

The present invention is based on the above finding obtained by the present inventors. Means for solving the problems are as follows.

<1> A toner including:

a polyester as a binder resin, and
a releasing agent,
wherein the releasing agent includes a first C30-C50 alkyl monoester compound and a second C30-C50 alkyl monoester compound,
wherein the number of carbon atoms of the first C30-C50 alkyl monoester compound is different from the number of carbon atoms of the second C30-C50 alkyl monoester compound,
wherein the amount of the first C30-C50 alkyl monoester compound is the largest in the releasing agent and the amount of the second C30-C50 alkyl monoester compound is the second largest in the releasing agent or the same as the amount of the first C30-C50 alkyl monoester compound,
wherein the amount of the first C30-C50 alkyl monoester compound is 30% by mass or more but less than 50% by mass with respect to the releasing agent, and
wherein the amount of the second C30-C50 alkyl monoester compound is 10% by mass or more but less than 50% by mass with respect to the releasing agent,
wherein the difference between the number of the carbon atoms of the first C30-C50 alkyl monoester compound and the number of the carbon atoms of the second C30-C50 alkyl monoester compound is 4 to 8 as an absolute value.

<2> A method for producing the toner according to <1>, including:

dissolving or dispersing, in an organic solvent, a releasing agent and at least one of a binder resin containing an ester bond and a binder resin precursor containing an ester bond, to thereby prepare a toner material liquid,
emulsifying or dispersing the toner material liquid in an aqueous medium to prepare an emulsion or dispersion liquid, and
removing the organic solvent from the emulsion or dispersion liquid to form base particles.

<3> An image forming method including:

charging a surface of an image bearing member,

exposing the charged surface of the image bearing member to light to form a latent electrostatic image on the image bearing member,
developing the latent electrostatic image formed on the image bearing member with a developer containing a toner to form a toner image on the image bearing member,
transferring the toner image onto a recording medium, and
fixing the transferred toner image on the recording medium,
wherein the toner is the toner according to <1>.

Advantageous Effects of Invention

The present invention can provide: a toner having excellent low temperature fixability, wide fixing temperature range, excellent releaseability even at high fixing temperatures, excellent transfer efficiency, and less contamination in the apparatus; a method for producing the toner; and an image forming method. These can solve the above-described existing problems.

Brief Description of Drawings

Fig. 1 is a schematic view of the configuration of one exemplary image forming apparatus in which an image forming method of the present invention is performed.

Description of Embodiments

(Toner)

A toner of the present invention contains at least a binder resin containing an ester bond (an ester bond-containing binder resin) and a releasing agent; and, if necessary, further contains other ingredients.
The toner preferably contains base particles.

<Releasing agent>

The releasing agent contains a first C30-C50 alkyl monoester compound and a second C30-C50 alkyl monoester compound, wherein the number of carbon atoms of the first C30-C50 alkyl monoester compound is different from the number of carbon atoms of the second C30-C50 alkyl monoester compound, wherein the amount of the first C30-C50 alkyl monoester compound is the largest in the releasing agent and the amount of the second C30-C50 alkyl monoester compound is the second largest in the releasing agent or the same as the amount of the first C30-C50 alkyl monoester compound. The releasing agent preferably contains a third C30-C50 alkyl monoester compound; and, if necessary, further contains other ingredients.
The alkyl monoester compound is produced through, for example, esterification reaction between a long-chain aliphatic carboxylic acid component and a long-chain aliphatic alcohol component. For example, the esterification between a rather-high-purity long-chain aliphatic carboxylic acid (whose alkyl group has about 15 to about 30 carbon atoms, for example) and a high-purity long-chain aliphatic alcohol (whose alkyl group has about 16 to about 35 carbon atoms, for example) gives a mixture of alkyl monoester compounds having a narrow distribution of the number of carbon atoms. The mixture of the alkyl monoester compounds having a narrow distribution of the number of carbon atoms has a narrow range of melting point and also a low viscosity. This mixture contains a small amount of components evaporated at low temperatures and is easily separated from toner particles when heated, and thus is excellent in releaseability.
Also, two or more alkyl monoester compounds contained in the releasing agent in predetermined amounts have appropriately different polarities depending on the total number of carbon atoms of the alkyl groups in the molecules thereof. Thus, one component of the alkyl monoester compounds exists in the vicinity of the surface layer of the toner particles to ensure releaseability at a low temperature. While, another component of the alkyl monoester compounds exists inside the toner particles (i.e., closer to the cores of the toner particles) to be able to exude when the toner particles are heated to a high temperature. Such distributed alkyl monoester compounds can exhibit releaseability upon fixing in a wide temperature range. In addition, since all of the components of the releasing agent do not exist in the surface layer of the toner particles, the releasing agent less contaminates members such as a charging member (e.g., a charging blade) and a carrier. Thus, use of the toner of the present invention realizes image formation excellent in durability.
Also, when the toner particles contain base particles produced by emulsifying oil droplets in an aqueous medium, the polarities of the alkyl monoester compounds greatly influence a state where the releasing agent is contained (located) inside the toner particles. Here, since the alkyl monoester compounds having different numbers of carbon atoms are mixed together, the distribution in polarities thereof can allow the releasing agent to suitably be contained (located) inside

the toner particles.

As a result of studies by the present inventors, it has been found that the alkyl monoester compound whose total carbon number is relatively small tends to exist closer to the surface of the toner particles, while the alkyl monoester compound whose total carbon number is relatively large tends to be dispersed inside the toner particles (closer to the cores of the toner particles).

-First and second C30-C50 alkyl monoester compounds-

The first C30-C50 alkyl monoester compound is a component of the releasing agent which is contained in the largest amount.

The second C30-C50 alkyl monoester compound is another component of the releasing agent which is contained in the second largest amount or the same amount as the amount of the first C30-C50 alkyl monoester compound.

The first C30-C50 alkyl monoester compound and the second C30-C50 alkyl monoester compound are not particularly limited and may be appropriately selected depending on the intended purpose. Examples thereof include compounds represented by the following General Formula (I):

Ra-COO-Rb ··· (I)

where Ra represents a C15-C30 alkyl group and Rb represents a C1-C34 alkyl group.

Further examples of the alkyl monoester compounds contained in the releasing agent include ester compounds synthesized through esterification reaction between a monofunctional long-chain aliphatic carboxylic acid and a monofunctional long-chain aliphatic alcohol.

Examples of the monofunctional long-chain aliphatic carboxylic acid include nonadecanoic acid, eicosanoic acid, heneicosanoic acid, docosanoic acid, tetracosanoic acid, pentacosanoic acid, hexacosanoic acid, heptacosanoic acid, octacosanoic acid, nonacosanoic acid, triacontanoic acid, myristic acid, palmitic acid, stearic acid, arachidenic acid and behenic acid, with stearic acid, behenic acid and myristic acid being preferred.

Examples of the monofunctional long-chain aliphatic alcohol include methanol, ethanol, propanol, butane-1-ol, pentane-1-ol, hexane-1-ol, heptane-1-ol, octane-1-ol, nonane-1-ol, decane-1-ol, eicosane-1-ol (eicosanol), myristyl alcohol, cetyl alcohol, palmityl alcohol, stearyl alcohol, arachidel alcohol and behenyl alcohol, with steary alcohol, eicosanol and cetyl alcohol being preferred.

In the alkyl monoester compounds, for example, Ra is preferably a C15-C30 linear alkyl group (a long-chain aliphatic group), more preferably a C17-C21 linear alkyl group (a long-chain aliphatic group). Also, Rb is preferably a C14-C34 linear alkyl group (a long-chain aliphatic group), more preferably a C14-C20 linear alkyl group (a long-chain aliphatic group).

The amount of the first C30-C50 alkyl monoester compound is 30% by mass or more but less than 50% by mass, preferably 40% by mass or more but less than 50% by mass, with respect to the releasing agent. When the amount thereof is less than 30% by mass, the formed toner has a narrow fixing temperature range and becomes degraded in releaseability at high fixing temperatures. In addition, the toner is decreased in transfer efficiency, causing contamination in the apparatus. Whereas when the amount thereof is equal to or more than 50% by mass, the formed toner becomes degraded in releaseability at high fixing temperatures. In addition, the toner is degraded in transfer efficiency, causing contamination in the apparatus.

The amount of the second C30-C50 alkyl monoester compound is 10% by mass or more but less than 50% by mass, preferably 40% by mass or more but less than 50% by mass, with respect to the releasing agent. When the amount thereof is less than 10% by mass, the formed toner cannot respond to variation in fixing temperature in the apparatus, and is not satisfactory in releaseability at the upper and lower limits of the temperatures in the apparatus.

The difference in the number of carbon atoms between the first C30-C50 alkyl monoester compound and the second C30-C50 alkyl monoester compound is 4 to 8 as an absolute value. When the difference in the number of carbon atoms therebetween is 13 or greater, an increased amount of components is evaporated at a specific fixing temperature range, potentially causing contamination in the apparatus. When the difference in the number of carbon atoms therebetween falls within the above range, the formed toner is excellent in all of minimum fixing temperature, fixing temperature range, releaseability at high fixing temperatures, transfer efficiency and an anti-contamination property in the apparatus, which is advantageous.

Also, since the fixing temperature in the apparatus is controlled within a certain temperature range (e.g., a narrow temperature range of the preset temperature ± 10°C), when the number of the carbon atoms of the first C30-C50 alkyl monoester compound is smaller by 13 or greater than that of the second C30-C50 alkyl monoester compound, the amount of the releasing agent evaporated within the controlled temperature range may be increased (most of the first C30-C50 alkyl monoester compound is evaporated).

The total amount of the first C30-C50 alkyl monoester compound and the second C30-C50 alkyl monoester

compound is not particularly limited and may be appropriately selected depending on the intended purpose. The total amount thereof is preferably 60% by mass or more, more preferably 80% by mass or more, particularly preferably 90% by mass or more, with respect to the releasing agent. When the total amount thereof falls within the above particularly preferred range, it is advantageous in that the formed toner has desired releaseability and causes less contamination in the apparatus.

Regarding a combination of the first C30-C50 alkyl monoester compound and the second C30-C50 alkyl monoester compound, preferred are a combination of a C36 alkyl monoester compound and a C38 alkyl monoester compound, a combination of a C36 alkyl monoester compound and a C40 alkyl monoester compound, a combination of a C36 alkyl monoester compound and a C42 alkyl monoester compound, a combination of a C38 alkyl monoester compound and a C42 alkyl monoester compound, a combination of a C34 alkyl monoester compound and a C42 alkyl monoester compound, and a combination of a C30 alkyl monoester compound and a C40 alkyl monoester compound.

-Third C30-C50 alkyl monoester compound-

The third C30-C50 alkyl monoester compound is a component of the releasing agent which is contained in the third largest amount or the same amount as that of the second C30-C50 alkyl monoester compound.

The third C30-C50 alkyl monoester compound is, for example, a compound represented by the above General Formula (I).

The total amount of the first C30-C50 alkyl monoester compound, the second C30-C50 alkyl monoester compound and the third C30-C50 alkyl monoester compound is not particularly limited and may be appropriately selected depending on the intended purpose. The total amount thereof is preferably 95% by mass or more with respect to the releasing agent, since the formed toner has desired releaseability and causes less contamination in the apparatus.

The releasing agent contains, as main components, the first C30-C50 alkyl monoester compound and the second C30-C50 alkyl monoester compound. Other types of the releasing agent (e.g., paraffins) may be contained therein, so long as fixability/releaseability, less contamination against a charging member and durability of the formed toner are maintained to satisfactory levels.

The releasing agent can be produced through esterification between starting materials (alcohols and acids) having various numbers of carbon atoms for attaining an intended distribution of the number of carbon atoms; and purification. Alternatively, high-purity alcohols and acids (starting materials) may be separately reacted together to synthesize various types of alkyl monoester compounds, and then the obtained alkyl monoester compounds may be mixed together.

The method for obtaining an intended releasing agent by mixing is, for example, a method in which an alkyl monoester compound mixture containing the first C30-C50 alkyl monoester compound as a main component (preferably in an amount of 85% by mass or more) is mixed with another alkyl monoester compound mixture containing the second C30-C50 alkyl monoester compound (preferably in an amount of 85% by mass or more).

The melting point of the releasing agent is not particularly limited and may be appropriately selected depending on the intended purpose. It is preferably 50°C to 100°C, more preferably 50°C to 75°C. When the melting point is lower than 50°C, blocking easily occurs when storing the toner, resulting in that the toner may be degraded in heat resistance storageability. Whereas when the melting point thereof is higher than 100°C, the toner may be degraded in low temperature fixability.

Here, the melting point refers to an endothermic peak temperature at which the amount of heat absorbed by a sample (toner) becomes maximum in a differential scanning calorimetry curve obtained through differential scanning calorimetry (DSC) (this temperature is referred to as "maximum endothermic peak temperature").

The melt viscosity of the releasing agent is not particularly limited and may be appropriately selected depending on the intended purpose. The melt viscosity thereof at 100°C is preferably 1.0 mPa·sec to 20 mPa·sec, more preferably 1.0 mPa·sec to 10 mPa·sec. When the melt viscosity is lower than 1.0 mPa·sec, the toner may be degraded in flowability. Whereas when the melt viscosity is higher than 20 mPa·sec, the releasing agent may be dispersed insufficiently in the toner.

Here, the melt viscosity can be measured with a Brookfield rotational viscometer.

The acid value of the releasing agent is not particularly limited and may be appropriately selected depending on the intended purpose. It is preferably 0.1 mgKOH/g to 20 mgKOH/g. From the viewpoints of offset resistance and dispersibility of the releasing agent, the acid value thereof is more preferably 3 mgKOH/g to 15 mgKOH/g. When the acid value is lower than 0.1 mgKOH/g, the dispersibility of the releasing agent becomes insufficient, resulting in that the formed toner may be degraded in various properties such as an anti-contamination property. Whereas when the acid value is higher than 20 mgKOH/g, the releasing agent is easily transferred into an aqueous medium (aqueous phase) in which a toner material liquid (oil phase) is emulsified or dispersed. As a result, the amount of the releasing agent contained in the base particles for the toner becomes insufficient and thus, the resultant toner may be degraded in offset resistance. In addition, the releasing agent is easily localized in the surfaces of the base particles for the toner and thus,

the resultant toner containing the base particles is easily made adhere to the developing device, potentially causing image failure. Furthermore, separability between the releasing agent and polyester decreases, resulting in that the formed toner may be degraded in offset resistance.

Here, the acid value can be measured using potentiometric automatic titrator DL-53 (product of Mettler-Toledo K.K.), electrode DG113-SC (product of Mettler-Toledo K.K.) and analysis software LabX Light Version 1.00.000. The titrator is calibrated with a solvent mixture of toluene (120 mL) and ethanol (30 mL). The measurement temperature is set to 23°C. The measurement conditions are as follows.

<Measurement conditions>

Stir

Speed[%] 25
Time [s] 15

EQP titration

Titrant/Sensor
Titrant CH3ONa
Concentration[mol/L] 0.1
Sensor DG115
Unit of measurement mV

Predispensing to volume

Volume[mL] 1.0
Wait time[s] 0

Titrant addition Dynamic

dE(set)[mV] 8.0
dV(min)[mL] 0.03
dV(max)[mL] 0.5

Measure mode Equilibrium controlled

dE[mV] 0.5
dt[s] 1.0
t(min)[s] 2.0
t(max)[s] 20.0

Recognition

Threshold 100.0
Steepest jump only No
Range No

Tendency None

Termination

at maximum volume[mL] 10.0
at potential No
at slope No
after number EQPs Yes
n=1
comb. termination conditions No

Evaluation

Procedure Standard
Potential 1 No
Potential 2 No
Stop for reevaluation No

Specifically, the acid value is measured according to JIS K0070-1992 as follows. First, a sample (0.5 g) is added to toluene (120 mL), followed by dissolving under stirring at room temperature (23°C) for about 10 hours. Then, ethanol (30 mL) is added to the resultant solution to prepare a sample solution. Next, the thus-prepared sample solution is titrated with a pre-standardized 0.1N potassium hydroxide alcohol solution whereby the titration amount X (mL) is obtained. The thus-obtained titration amount X is used in the following equation to calculate an acid value:

$$\text{Acid value} = X \times N \times 56.1/\text{mass of sample [mgKOH/g]}$$

where N is a factor of the 0.1N potassium hydroxide alcohol solution.

The amount of the releasing agent contained is not particularly limited and may be appropriately selected depending on the intended purpose. The amount of the releasing agent is preferably 1% by mass to 20% by mass with respect to the base particles. When the amount thereof is less than 1% by mass, the fixing temperature range may be narrowed. Whereas when the amount thereof is more than 20% by mass, transfer efficiency may decrease.

The releasing agent is preferably finely dispersed in the base particles without being localized in the surfaces of the base particles. The dispersion diameter of the releasing agent is preferably 0.06 μm to 0.80 μm, more preferably 0.10 μm to 0.30 μm. When the dispersion diameter thereof is more than 0.80 μm, variation in amount of the releasing agent becomes large between the base particles, potentially degrading chargeability and flowability. In addition, the releasing agent may adhere to the developing device. As a result, high-quality images cannot be obtained in some cases. Whereas when the dispersion diameter of the releasing agent is less than 0.06 μm, the rate of the releasing agent present inside the base particles becomes high (the rate of the releasing agent present in the surfaces of the base particles becomes relatively low), potentially degrading releaseability.

Here, the dispersion diameter refers to the maximum diameter of the dispersed particles of the releasing agent.

Notably, the method for measuring the dispersion diameter of the releasing agent is not particularly limited and may be the following method, for example.

First, the base particle is embedded in an epoxy resin, and then the resultant product is sliced to a thickness of about 100 nm. The thus-obtained piece is stained with ruthenium tetroxide, and then is observed under a transmission electron microscope (TEM) at × 10,000, followed by photographing. The obtained photograph is evaluated for dispersion state of the releasing agent, whereby the dispersion diameter of the releasing agent can be measured.

<Ester bond-containing binder resin>

The ester bond-containing binder resin is a polyester.

Examples of the polyesters include unmodified polyesters, modified polyesters and crystalline polyesters.

The unmodified polyester refers to a polyester containing no other bond units (e.g., an urethane bond and a

urea bond) than the ester bond.

The modified polyester refers to a polyester containing other bond units in addition to the ester bond.

As the ester bond-containing binder resin, the unmodified polyester and the modified polyester may be used in combination. For example, unmodified polyester (ii) and modified polyester (i) [e.g., urea-modified polyester] may be used as toner binder components. When using (i) and (ii) in combination, the low temperature fixability is improved and, if used in a full-color image forming apparatus, the glossiness is also improved. Thus, using (i) and (ii) in combination is preferred as compared with using (i) alone. Also, (i) and (ii) are preferably compatible with each other at least partially, from the viewpoints of improvements in low temperature fixability and offset resistance. Therefore, the polyester component of (i) is preferably similar to that of (ii).

-Unmodified polyester-

The peak molecular weight of the unmodified polyester (ii) is not particularly limited and may be appropriately selected depending on the intended purpose. It is generally 1,000 to 30,000, more preferably 1,500 to 10,000, more preferably 2,000 to 8,000. When the peak molecular weight thereof is lower than 1,500, the heat resistance storageability may be degraded. Whereas when the peak molecular weight thereof is higher than 10,000, the low temperature fixability may be degraded.

The weight average molecular weight of the unmodified polyester (ii) is not particularly limited and may be appropriately selected depending on the intended purpose. It is preferably 2,000 to 90,000.

The glass transition temperature (Tg) of the unmodified polyester (ii) is not particularly limited and may be appropriately selected depending on the intended purpose. From the viewpoint of attaining wide fixing temperature range, it is preferably 40°C to 80°C, more preferably 50°C to 60°C.

The hydroxyl value of the unmodified polyester (ii) is not particularly limited and may be appropriately selected depending on the intended purpose. It is preferably 5 mgKOH/g or more, more preferably 10 mgKOH/g to 120 mgKOH/g, still more preferably 20 mgKOH/g to 80 mgKOH/g. When the hydroxyl value thereof is lower than 5 mgKOH/g, it may be difficult to attain both desired heat resistance storageability and desired low temperature fixability.

The acid value of unmodified polyester (ii) is not particularly limited and may be appropriately selected depending on the intended purpose. It is generally 1 mgKOH/g to 50 mgKOH/g, preferably 5 mgKOH/g to 40 mgKOH/g, more preferably 20 mgKOH/g to 40 mgKOH/g, particularly preferably 30 mgKOH/g to 40 mgKOH/g. When the acid value thereof falls within the above particularly preferred range, it is advantageous in that the formed toner exhibits more excellent transferability and causes less contamination in the apparatus. This is likely because the dispersibility of the releasing agent increases to considerably decrease the amount of the releasing agent exposed to the toner surface. When the unmodified polyester has an acid value, the formed toner tends to be negatively charged.

When the acid value and the hydroxyl value exceed the above ranges, the formed toner is adversely affected by environmental factors under high-temperature, high-humidity or low-temperature, low-humidity environment, easily causing image failures.

-Crystalline polyester-

When the toner contains a crystalline polyester together with the modified polyester, various specific alkyl monoester compounds used as the releasing agent are finely dispersed in the toner, preventing contamination of the releasing agent against a carrier and a charging member. Furthermore, it has been found that controlling the melt viscosity at 100°C of the alkyl monoester compounds contributes greatly to fine dispersion of the releasing agent in the toner.

The mechanism by which the crystalline polyester improves fine dispersion of the alkyl monoester compound is not clear, but the following mechanism is presumed.

Specifically, the crystalline polyester and the alkyl monoester compounds are dispersed in a crystalline state without being dissolved in the amorphous resin in the base particles. The crystalline polyester has affinity to and thus easily accessible to the alkyl monoester compounds to promote their mutual dispersiblities, whereby the releasing agent can finely be dispersed in the base particles.

In particular, when a mixture of alkyl monoester compounds contains components having different total carbon atoms, one of the components has high affinity to the crystalline polyester (the one component may be a component having more carbon atoms) while another or other components have high affinity to the amorphous polyester component (the another or other components may be a component(s) having less carbon atoms). By virtue of these effects suitably combined together, the releasing agent (a plurality of alkyl monoester compounds) is satisfactorily dispersed in the binder resin (toner binder).

The crystalline polyester is originally used for improving fixability. However, in the present invention, the crystalline polyester is contained in the toner material together with the alkyl monoester compounds (especially, alkyl monoester compounds each having a melt viscosity at 100°C of 1.0 mPa·sec to 20 mPa·sec). Use of the crystalline polyester allows the releasing agent to be finely dispersed in the base particles, resulting in that the amount of the releasing agent exposed on the surfaces of the base particles is reduced; i.e., the releasing agent is not localized in the surfaces thereof, which maintained unchanged the total amount of the releasing agent contained in the base particles. As a result, while releaseability during fixing is being maintained unchanged (without being degraded), contamination against the carrier and charging member due to the releasing agent present in the surfaces of the toner particles containing the base particles is suppressed to obtain good results.

In general, in a low-temperature fixable toner employing a crystalline polyester, the crystalline polyester exists in the toner in a state where it is phase-separated from the amorphous toner binder. Thus, releaseabilities corresponding to both the phases are required when the toner is melted. As in the present invention, the toner containing two or more types of alkyl monoester compounds is quite advantageous in ensuring the releaseabilities for fused or melted crystalline polyester and amorphous toner binder (e.g., an unmodified polyester and a modified polyester) present in the toner in the phase-separated state.

Incorporation of the crystalline polyester allows the formed toner to be quite excellent in low temperature fixability, to have a wider fixing temperature range, and to be quite excellent in releaseability even at a high fixing temperature.

The crystalline polyester is produced between an alcohol component and an acid component and is a polyester having at least a melting point.

The crystalline polyester is preferably a crystalline polyester synthesized using, as the alcohol component, a C2-C12 saturated aliphatic diol compound (especially, 1,4-butanediol, 1,6-hexanediol, 1,8-octanediol, 1,10-decanediol or 1,12-dodecanediol) or a derivative thereof and, as the acid component, a C2-C12 dicarboxylic acid having a double bond (C=C bond), a C2-C12 saturated dicarboxylic acid (especially, fumaric acid, 1,4-butanedioic acid, 1,6-hexanedioic acid, 1,8-octanedioic acid, 1,10-decanedioic acid or 1,12-dodecanedioic acid) or a derivative thereof.

In particular, from the viewpoint of making smaller the difference between the endothermic peak temperature and the endothermic shoulder temperature, the crystalline polyester preferably consists of one alcohol component which is 1,4-butanediol, 1,6-hexanediol, 1,8-octanediol, 1,10-decanediol or 1,12-dodecanediol and one dicarboxylic acid component which is fumaric acid, 1,4-butanedioic acid, 1,6-hexanedioic acid, 1,8-octanedioic acid, 1,10-decanedioic acid or 1,12-dodecanedioic acid.

Moreover, the crystalline polyester is preferably a crystalline polyester having a repeating structural unit represented by the following General Formula (1).

$$-\!\!\left[ O-CO-CR_1=CR_2-CO-O-(CH_2)_n \right]\!\!- \quad \cdots(1)$$

In General Formula (1), $R_1$ and $R_2$ each represent a hydrogen atom or a C1-C20 hydrocarbon group; and n is a natural number.

Examples of the method for controlling the crystallinity and softening point of the crystalline polyester include a method in which the molecule of non-linear polyesters or the like is appropriately designed. The non-linear polyester can be synthesized through condensation polymerization between the alcohol component additionally containing a tri or higher polyhydric alcohol (e.g., glycerin) and the acid component additionally containing a tri or higher polycarboxylic acid (e.g., trimellitic anhydride).

The molecular structure of the crystalline polyester can be confirmed through, for example, solid NMR.

As a result of the extensive studies conducted in view that a crystalline polyester having a sharp molecular weight distribution and a low molecular weight is excellent in low temperature fixability, the molecular weight of the crystalline polyester is preferably adjusted as follows. Specifically, in a molecular weight distribution diagram obtained through GPC of the soluble matter of a sample in o-dichlorobenzene where the horizontal axis indicates log(M) and the vertical axis indicates % by mass, preferably, the peak is in the range of 3.5 to 4.0 and the half width of the peak is 1.5 or less. In addition, the weight average molecular weight (Mw) is 1,000 to 6,500, the number average molecular weight (Mn) is 500 to 2,000, and the Mw/Mn is 2 to 5.

The acid value of the crystalline polyester is not particularly limited and may be appropriately selected depending on the intended purpose. It is preferably 8 mgKOH/g to 45 mgKOH/g. This is because, in order to attain intended low temperature fixability in terms of compatibility between paper and resin, the acid value thereof is preferably 8 mgKOH/g or higher, more preferably 20 mgKOH/g or higher, and also, in order to improve hot offset resistance, the acid value thereof is preferably 45 mgKOH/g or lower.

Also, the hydroxyl value of the crystalline polyester is preferably 0 mgKOH/g to 50 mgKOH/g, more preferably 5 mgKOH/g to 50 mgKOH/g, in order to attain desired low temperature fixability and excellent chargeability.

Regarding the dispersion particle diameter of the crystalline polyester in the base particles, preferably, the ratio

of major axis diameter to minor axis diameter (major axis diameter/minor axis diameter) is 3 or more, and the major axis diameter is 0.2 μm to 3.0 μm. When the above ratio is less than 3 and the major axis diameter is less than 0.2 μm, it is difficult for the crystalline polyester to show its crystallinity and thus it is difficult to obtain low-temperature fixability in the present invention. When the major axis diameter is too large; i.e., more than 3.0 μm, the toner particles are greatly deformed and then easily pulverized in the machine. In addition, the crystalline polyester having such major axis diameter is easily exposed to the toner surface. In an extreme case, the crystalline polyester independently exists outside the toner, finally contaminating parts of the machine. That is, adjusting the major axis diameter in the dispersion particle diameter to fall within a range of 0.2 μm to 3.0 μm ensures that the alkyl monoester compounds are finely dispersed in the base particles and prevents the releasing agent from localized in the surfaces of the base particles.

The crystalline polyester preferably has an endothermic peak temperature of 50°C to 150°C as measured through differential scanning calorimetry (DSC). When the endothermic peak temperature is lower than 50°C, the formed toner particles aggregate during storage at high temperatures to be degraded in heat resistance storageability, resulting in that the toner particles easily cause blocking at temperatures of a developing device. Whereas when the endothermic peak temperature is higher than 150°C, the minimum fixing temperature of the formed toner becomes high not to obtain low temperature fixability.

Preferably, the crystalline polyester is uniformly dispersed in the toner. By uniformly dispersing the crystalline polyester, which has a function of aiding fixing and a property of rapidly melting, in the toner particles containing the base particles, the crystalline polyester is rapidly diffused in the toner during heating, exhibiting good releaseability.

Here, the cross-sectional surface of the toner particles can be observed and evaluated under a transmission electron microscope (TEM) as follows.

Specifically, the produced toner particles are subjected to vapor staining using a commercially available 5% by mass aqueous solution of ruthenium tetroxide. The thus-stained toner particles are embedded in an epoxy resin, and then cut with a diamond knife using a microtome (Ultracut-E) to prepare a section. The thickness of the section is adjusted to be about 100 nm based on the interference color of the epoxy resin. The prepared section is placed on a copper grid mesh where it is further subjected to vapor staining using a commercially available 5% by mass aqueous solution of ruthenium tetroxide. The obtained section is observed under a transmission electron microscope (product of JEOL Ltd., JEM-2100F) and images of the cross-sectional surfaces of the toner particles in the section are recorded. The cross-sectional surfaces of 20 toner particles are observed for the toner surface formed of the crystalline polyester and the fine resin particles (profile of the cross-sectional surface of the toner particles), to thereby evaluate how the fine resin particles and the crystalline polyester exist.

The toner particles themselves are stained before preparation of the section as described above and thus, the material for staining penetrates the surfaces of the toner particles. The coated film formed of the fine resin particles present in the uppermost surface of the toner particles to be photographed can be observed based on clearer difference in contrast. For example, when the coated film formed of the fine resin particles is different from organic components inside the coated film, the coated film can be discriminated from the resin inside the toner particles.

Furthermore, the section is further stained as described above and thus, the crystalline polyester can be observed with clear contrast. The crystalline polyester is stained more weakly than is the organic components inside the toner particles. This is likely because the degree of penetration of a material for staining into the crystalline polyester is lower than that in the case of the organic components inside the toner particles due to, for example, the difference in density therebetween. Strongly stained regions contain a large amount of ruthenium atoms, and do not transmit electron beams to be black in an observed image. While weakly stained regions contain a small amount of ruthenium atoms, and easily transmit electron beams to be white on an observed image.

The crystalline polyester is used as a crystalline polyester dispersion liquid (organic solvent dispersion liquid) containing a binder resin in an amount of 5 parts by mass to 25 parts by mass per 100 parts by mass of the dispersion liquid. The crystalline polyester preferably has an average particle diameter (dispersion diameter) of 200 nm to 3,000 nm.

When the dispersion diameter of the crystalline polyester is less than 200 nm, the crystalline polyester aggregates inside the base particles, resulting in that charge-imparting effect cannot sufficiently be obtained in some cases. Whereas when the dispersion diameter of the crystalline polyester is more than 3,000 nm, surface properties of the formed toner are degraded to contaminate the carrier, resulting in that sufficient chargeability cannot be maintained for a long period of time and also environmental stability may be degraded.

The organic solvent dispersion liquid of the crystalline polyester preferably contains the crystalline polyester in an amount of 5 parts by mass and ester bond-containing binder resins other than the crystalline polyester in an amount of 5 parts by mass to 25 parts by mass, per 100 parts by mass of the dispersion liquid. More preferably, it contains the crystalline polyester in an amount of 5 parts by mass and the ester bond-containing binder resins other than the crystalline polyester in an amount of 15 parts by mass. When the amount of the ester bond-containing binder resin other than the crystalline polyester is less than 5 parts by mass, the dispersion diameter of the crystalline polyester does not become small in some cases. Whereas when the amount of the ester bond-containing binder resin other than the crystalline polyester is more than 25 parts by mass, the organic solvent dispersion liquid of the crystalline polyester involves

aggregation of the crystalline polyester when added to the solution or dispersion liquid of toner materials, resulting in that the low-temperature fixing effect cannot sufficiently be obtained in some cases.

In the case where the crystalline polyester is heated in an organic solvent and then cooled; the resultant solution is emulsified in an aqueous surfactant solution to obtain fine dispersoids; and the dispersoids are directly dried for use in toner production, there may be the following problems.

(1) Since the crystalline polyester is dissolved in an organic solvent and emulsified, the particles are spherical and do not maintain a crystalline state.
(2) Even if the crystalline polyester is precipitated upon cooling, coarse precipitates are emulsified not to obtain fine particles.
(3) The dispersoids are dried in the presence of a large amount of the surfactant (for example, in an amount corresponding to 1/5 (20% by mass) with respect to the crystalline polyester) whereby fine particles aggregate and also are coated with the surfactant. The obtained particles are directly used in toner production and thus, are poor in dispersibility in the toner. In addition, the crystalline polyester cannot exhibit its effects even when melted during fixing.

The amount of the crystalline polyester is preferably 1 part by mass to 30 parts by mass per 100 parts by mass of the base particles. When the amount thereof is less than 1 part by mass, low-temperature fixing effect cannot sufficiently be obtained in some cases. Whereas when the amount thereof is higher than 30 parts by mass, the amount of the crystalline polyester present in the uppermost surface of the toner is too large and the crystalline polyester contaminates an image bearing member or other members, potentially decreasing image quality, flowability of the developer and image density. Also, surface properties of the formed toner are degraded to contaminate the carrier, resulting in that sufficient chargeability cannot be maintained for a long period of time and also environmental stability may be degraded.

-Modified polyester-

The modified polyester contains, in the molecular structure thereof, at least an ester bond and other bond units than the ester bond. Such modified polyester can be produced from a resin precursor capable of producing the modified polyester. For example, the modified polyester can be produced through reaction between a polyester containing a functional group reactive with an active hydrogen group and a compound containing the active hydrogen group.

Examples of the polyester containing a functional group reactive with an active hydrogen group include polyester prepolymers containing, for example, an isocyanate group and/or an epoxy group. Such polyester containing a functional group reactive with an active hydrogen group can be easily synthesized through reaction a polyester (base reactant) and a conventionally known isocyanating agent (isocyanate group-containing compound) and/or epoxidizing agent (epoxy group-containing compound).

For example, incorporation, into a binder resin, of a modified polyester produced through elongation reaction between an isocyanate group-containing polyester (polyester prepolymer) and an active hydrogen group-containing compound (e.g., an amine) can enlarge the difference between the minimum fixing temperature and hot offset-occurring temperature, and also improve the release range.

Examples of the isocyanating agent include aliphatic polyisocyanates (e.g., tetramethylene diisocyanate, hexamethylene diisocyanate and 2,6-diisocyanatomethylcaproate), alicyclic polyisocyanates (e.g., isophoron diisocyanate and cyclohexylmethane diisocyanate), aromatic diisocyanates (e.g., tolylene diisocyanate and diphenylmethane diisocyanate), aromatic aliphatic diisocyanates (e.g., $\alpha,\alpha,\alpha',\alpha'$-tetramethylxylylene diisocyanate), isocyanurates, and blocked products of the above polyisocyanates with phenol derivatives, oxime, caprolactam, etc. These may be used alone or in combination.

Typical examples of the epoxidizing agent include epichlorohydrin.

As one example, next will be described a case where a modified polyester (i.e., modified polyester containing an ester bond and a urea bond) is synthesized through reaction between an active hydrogen group-containing compound (e.g., an amine) and an isocyanate group-containing polyester serving as a polyester having a functional group reactive with the active hydrogen group.

Regarding the ratio of the isocyanating agent used when producing the isocyanate group-containing polyester, the equivalence ratio [NCO]/[OH] of the isocyanate group [NCO] to the hydroxyl group [OH] of the polyester (base reactant) is generally 5/1 to 1/1, preferably 4/1 to 1.2/1, more preferably 2.5/1 to 1.5/1. When the equivalence ratio [NCO]/[OH] is greater than 5, there may be a decrease in low temperature fixability. Whereas when the [NCO]/[OH] is less than 1, the amount of urea bond contained in the modified polyester is small, so that there may be a decrease in hot offset resistance.

The amount of the isocyanating agent contained in the modified polyester is generally 0.5% by mass to 40% by mass, preferably 1% by mass to 30% by mass, more preferably 2% by mass to 20% by mass. When the amount

thereof is less than 0.5% by mass, there may be a decrease in hot offset resistance and there may be a disadvantage in achieving both desired heat-resistant storage stability and desired low temperature fixability. When the amount thereof is greater than 40% by mass, there may be a decrease in low temperature fixability.

The number of isocyanate groups contained per molecule in the isocyanate group-containing polyester is generally 1 or more, preferably 1.5 to 3 on average, more preferably 1.8 to 2.5 on average. When the number thereof per molecule is less than 1 on average, the molecular weight of the modified polyester (urea-modified polyester) obtained after elongation reaction is low, and thus there may be a decrease in hot offset resistance.

When an amine is used as the active hydrogen group-containing compound, the amine is, for example, a diamine compound, a trivalent or higher polyamine compound, an amino alcohol compound, an amino mercaptan compound, an amino acid compound, and compounds obtained by blocking the amino groups of these compounds.

Examples of the diamine compound include: aromatic diamines (e.g., phenylenediamine, diethyltoluenediamine, 4,4'-diaminodiphenylmethane); alicyclic diamines (e.g., 4,4'-diamino-3,3'-dimethyldicyclohexylmethane, diaminecyclohexane and isophoronediamine); and aliphatic diamines (e.g., ethylenediamine, tetramethylenediamine and hexamethylenediamine).

Examples of the trivalent or higher polyamine compound include diethylenetriamine and triethylenetetramine.

Examples of the amino alcohol compound include ethanolamine and hydroxyethylaniline.

Examples of the amino mercaptan compound include aminoethyl mercaptan and aminopropyl mercaptan.

Examples of the amino acid compound include aminopropionic acid and aminocaproic acid.

Examples of the compounds obtained by blocking the amino groups of these compounds include oxazoline compounds and ketimine compounds derived from the above amines and ketones (e.g., acetone, methy ethyl ketone and methyl isobutyl ketone).

Among these amines, preferred are the diamines, and mixtures each composed of any of the diamines and a small amount of any of the polyamines. The amine may be used also as a crosslinking agent or an elongating agent.

If necessary, an elongation terminator may be used so as to adjust the molecular weight of the modified polyester (urea-modified polyester). Examples of the elongation terminator include monoamines (e.g., diethylamine, dibutylamine, butylamine and laurylamine) and compounds obtained by blocking the monoamines (ketimine compounds).

As for the ratio of the amine, the equivalence ratio [NCO]/[NHx] of the isocyanate group [NCO] in the isocyanate group-containing polyester to the amino group [NHx] in the amine is generally 1/2 to 2/1, preferably 1.5/1 to 1/1.5, more preferably 1.2/1 to 1/1.2. When the equivalence ratio [NCO]/[NHx] is greater than 2 or less than 1/2, the molecular weight of the urea-modified polyester obtained after elongation reaction is low, and thus there may be a decrease in hot offset resistance.

The modified polyester (urea-modified polyester) may contain a urethane bond as well as a urea bond. The molar ratio of the amount of the urea bond to the amount of the urethane bond (urea bond/urethane bond) is generally 100/0 to 10/90, preferably 80/20 to 20/80, more preferably 60/40 to 30/70. When the molar ratio thereof is less than 10/90, there may be a decrease in hot offset resistance.

The modified polyester (urea-modified polyester) obtained through elongation reaction between the isocyanate group-containing polyester and the amine is produced by, for example, a one-shot method or a prepolymer method. The weight average molecular weight of the urea-modified polyester is generally 10,000 or greater, preferably 20,000 to 10,000,000, more preferably 30,000 to 1,000,000. When it is less than 10,000, there may be a decrease in hot offset resistance. The number average molecular weight of the urea-modified polyester is not particularly limited when the below-mentioned unmodified polyester is additionally used; it may be such a number average molecular weight as helps obtain the above-mentioned weight average molecular weight. When the urea-modified polyester is solely used as the binder resin, its number average molecular weight is generally 20,000 or less, preferably 1,000 to 10,000, more preferably 2,000 to 8,000. When it is greater than 20,000, there may be a decrease in low temperature fixability and, if the urea-modified polyester is used in a full-color image forming apparatus, there may be a decrease in glossiness.

In the above toner, the ester bond-containing binder resin (toner binder) may be, for example, a binder resin containing the modified polyester (i) and the unmodified polyester (ii), a binder resin containing the unmodified polyester (ii) and the crystalline polyester (iii), or a binder resin containing the modified polyester (i), the unmodified polyester (ii) and the crystalline polyester (iii).

For example, when (i), (ii) and (iii) are used in combination, the ratio by mass [(i)/(ii) + (iii)] in the toner is generally 5/95 to 25/75, preferably 10/90 to 25/75, more preferably 12/88 to 25/75, particularly preferably 12/88 to 22/78, in order to allow the toner to exhibit low temperature fixability. Also, the ratio by mass [(ii)/(iii)] is generally 99/1 to 50/50, preferably 95/5 to 60/40, more preferably 90/10 to 65/35. The ratio by mass between (i), (ii) and (iii) deviates from the above preferred ranges, there may be a decrease in hot offset resistance and there may be a disadvantage in achieving both desired heat resistance storageability and desired low temperature fixability.

In the present invention, the glass transition temperature (Tg) of the ester bond-containing binder resin (toner binder) is generally 40°C to 70°C, preferably 40°C to 65°C. When it is lower than 40°C, the heat resistance storageability of the toner may be degraded. Whereas when it is higher than 70°C, the low temperature fixability may become insufficient.

By virtue of the presence of the urea-modified polyester as the unmodified polyester, the toner of the present invention containing the base particles tends to be superior in heat-resistant storageability to known polyester toners even if the glass transition temperature is low.
The storage elastic modulus of the ester bond-containing binder resin is not particularly limited and may be appropriately selected depending on the intended purpose. The temperature (TG') at which it is 10,000 dyne/$cm^2$, at a measurement frequency of 20 Hz, is generally 100°C or higher, preferably 110°C to 200°C. When this temperature is lower than 100°C, there may be a decrease in hot offset resistance.
The viscosity of the toner binder is not particularly limited and may be appropriately selected depending on the intended purpose. The temperature (Tη) at which it is 1,000 P, at a measurement frequency of 20 Hz, is generally 180°C or lower, preferably 90°C to 160°C. When this temperature is higher than 180°C, there may be a decrease in low temperature fixability. Accordingly, it is desirable in terms of a balance between low temperature fixability and hot offset resistance that TG' be higher than Tη. In other words, the difference (TG' - Tη) between TG' and Tη is preferably 0°C or greater, more preferably 10°C or greater, particularly preferably 20°C or greater.
The upper limit of the difference between TG' and Tη is not particularly limited.
Also, in terms of a balance between heat-resistant storageability and low-temperature fixability, the difference (Tη - Tg) between Tη and Tg is preferably 0°C to 100°C, more preferably 10°C to 90°C, particularly preferably 20°C to 80°C.
The polyester contained in the ester bond-containing binder resin preferably has a molecular weight peak of 1,000 to 30,000, a component having a molecular weight of 30,000 or higher in an amount of 1% by mass to 80% by mass, and a number average molecular weight of 2,000 to 15,000, in the molecular weight distribution of THF (tetrahydrofuran) soluble matter thereof. Also, the polyester preferably contains a component having a molecular weight of 1,000 or lower in an amount of 0.1% by mass to 5.0% by mass in the molecular weight distribution of THF soluble matter of the polyester contained in the toner binder. In addition, the polyester contained in the toner binder preferably contains THF insoluble matter in an amount of 1% by mass to 15% by mass.

<Other ingredients>

Examples of the other ingredients include a colorant, a charge controlling agent and an external additive.

-Colorant-

The colorant may be any known dyes or pigments. Examples of the colorant include carbon black, nigrosine dye, iron black, naphthol yellow S, Hansa yellow (10G, 5G and G), cadmium yellow, yellow iron oxide, yellow ocher, yellow lead, titanium yellow, polyazo yellow, oil yellow, Hansa yellow (GR, A, RN and R), pigment yellow L, benzidine yellow (G and GR), permanent yellow (NCG), vulcan fast yellow (5G, R), tartrazinelake, quinoline yellow lake, anthrasan yellow BGL, isoindolinon yellow, colcothar, red lead, lead vermilion, cadmium red, cadmium mercury red, antimony vermilion, permanent red 4R, parared, fiser red, parachloroorthonitro anilin red, lithol fast scarlet G, brilliant fast scarlet, brilliant carmine BS, permanent red (F2R, F4R, FRL, FRLL and F4RH), fast scarlet VD, vulcan fast rubin B, brilliant scarlet G, lithol rubin GX, permanent red F5R, brilliant carmin 6B, pigment scarlet 3B, bordeaux 5B, toluidine Maroon, permanent bordeaux F2K, Helio bordeaux BL, bordeaux 10B, BON maroon light, BON maroon medium, eosin lake, rhodamine lake B, rhodamine lake Y, alizarin lake, thioindigo red B, thioindigo maroon, oil red, quinacridone red, pyrazolone red, polyazo red, chrome vermilion, benzidine orange, perinone orange, oil orange, cobalt blue, cerulean blue, alkali blue lake, peacock blue lake, victoria blue lake, metal-free phthalocyanin blue, phthalocyanin blue, fast sky blue, indanthrene blue (RS and BC), indigo, ultramarine, iron blue, anthraquinon blue, fast violet B, methylviolet lake, cobalt purple, manganese violet, dioxane violet, anthraquinon violet, chrome green, zinc green, chromium oxide, viridian, emerald green, pigment green B, naphthol green B, green gold, acid green lake, malachite green lake, phthalocyanine green, anthraquinon green, titanium oxide, zinc flower and lithopone.
These colorants may be used alone or in combination.
The amount of the colorant is not particularly limited and may be appropriately selected depending on the intended purpose. The amount of the colorant is generally 1% by mass to 15% by mass, preferably 3% by mass to 10% by mass, with respect to the toner.
The colorant may be mixed with a resin to form a masterbatch.
Examples of the resin which is used for producing a masterbatch or which is kneaded together with a masterbatch include the above-described modified or unmodified polyester resins; styrene polymers and substituted products thereof (e.g., polystyrenes, poly-p-chlorostyrenes and polyvinyltoluenes); styrene copolymers (e.g., styrene-p-chlorostyrene copolymers, styrene-propylene copolymers, styrene-vinyltoluene copolymers, styrene-vinylnaphthalene copolymers, styrene-methyl acrylate copolymers, styrene-ethyl acrylate copolymers, styrene-butyl acrylate copolymers, styrene-octyl acrylate copolymers, styrene-methyl methacrylate copolymers, styrene-ethyl methacrylate copolymers, styrene-butyl methacrylate copolymers, styrene-methyl α-chloro methacrylate copolymers, styrene-acrylonitrile copolymers, styrene-vinyl methyl ketone copolymers, styrene-butadiene copolymers, styrene-isoprene copolymers, styrene-acrylonitrile-indene copolymers, styrene-maleic acid copolymers and styrene-maleic acid ester copolymers); polymethyl methacrylates; polybutyl methacrylates; polyvinyl chlorides; polyvinyl acetates; polyethylenes; polypropylenes, polyesters; epoxy resins; epoxy polyol resins; polyurethanes; polyamides; polyvinyl butyrals; polyacrylic acid resins; rosin; modified rosin; terpene resins; aliphatic or alicyclic hydrocarbon resins; aromatic petroleum resins; chlorinated paraffins; and paraffin waxes.

These may be used alone or in combination.

The masterbatch can be prepared by mixing/kneading a colorant with a resin for use in a masterbatch through application of high shearing force. Also, an organic solvent may be used for improving mixing between these materials. Further, the flashing method, in which an aqueous paste containing a colorant is mixed/kneaded with a resin and an organic solvent and then the colorant is transferred to the resin to remove water and the organic solvent, is preferably used, since a wet cake of the colorant can be directly used (i.e., no drying is required). In this mixing/kneading, a high-shearing disperser (e.g., three-roll mill) is preferably used.

-Charge controlling agent-

The charge controlling agent is not particularly limited and may be appropriately selected depending on the intended purpose. Examples thereof include nigrosine dyes, triphenylmethane dyes, chrome-containing metal complex dyes, molybdic acid chelate pigments, rhodamine dyes, alkoxy amines, quaternary ammonium salts (including fluorine-modified quaternary ammonium salts), alkylamides, phosphorus, phosphorus compounds, tungsten, tungsten compounds, fluorine active agents, metal salts of salicylic acid, and metal salts of salicylic acid derivatives.

The charge controlling agent may be a commercially available product. Examples of the commercially available product include nigrosine dye BONTRON 03, quaternary ammonium salt BONTRON P-51, metal-containing azo dye BONTRON S-34, oxynaphthoic acid-based metal complex E-82, salicylic acid-based metal complex E-84 and phenol condensate E-89 (these products are of ORIENT CHEMICAL INDUSTRIES CO., LTD), quaternary ammonium salt molybdenum complex TP-302 and TP-415 (these products are of Hodogaya Chemical Co., Ltd.) and LRA-901 and boron complex LR-147 (these products are of Japan Carlit Co., Ltd.).

The amount of the charge controlling agent is not particularly limited and may be appropriately selected depending on the intended purpose. The amount of the charge controlling agent is preferably 0.1 parts by mass to 10 parts by mass, more preferably 0.2 parts by mass to 5 parts by mass, per 100 parts by mass of the binder resin. When the amount of the charge controlling agent is more than 10 parts by mass, the formed toner has too high chargeability, resulting in that the charge controlling agent exhibits reduced effects. As a result, the electrostatic force increases between the developing roller and the developer, decreasing the fluidity of the developer and forming an image with reduced color density in some cases.

The charge controlling agent may be melt-kneaded together with a masterbatch or resin before dissolution or dispersion. Alternatively, it may be directly added at the time when toner components are dissolved or dispersed in an organic solvent at the preparation step of a toner material liquid (oil phase). Furthermore, after the formation of the base particles, it may be fixed on the surfaces of the base particles.

-Fine resin particles-

In the present invention, fine resin particles may be used for forming base particles. Use of fine resin particles can improve dispersion stability. In addition, the toner particles formed from base particles can be narrowed in particle size distribution.

The resin used for the fine resin particles may be any resin, so long as they can form desired emulsion or dispersion liquid when a toner material liquid (oil phase), which has been obtained by dissolving or dispersing in an organic solvent toner materials containing at least an ester bond-containing binder resin and/or an ester bond-containing binder resin precursor and a releasing agent, is emulsified or dispersed in an aqueous medium (aqueous phase).

The fine resin particles may be a thermoplastic resin or a thermosetting resin. Examples thereof include vinyl resins, polyurethans, epoxy resins, polyesters, polyamides, polyimides, silicon-containing resins, phenol resins, melamine resins, urea resins, aniline resins, ionomer resins and polycarbonates.

These may be used alone or in combination.

Among them, preferred are vinyl resins, polyurethans, epoxy resins, polyesters and mixtures thereof, from the viewpoint of easily obtaining aqueous dispersoids of fine spherical resin particles.

The vinyl resin is a polymer produced through homopolymerization or copolymerization of vinyl monomers. Examples of the vinyl resin include styrene-(meth)acylate resins, styrene-butadiene copolymers, (meth)acrylic acid-acrylate polymers, styrene-acrylonitrile copolymers, styrene-maleic anhydride copolymers and styrene-(meth)acrylic acid copolymers.

The volume average particle diameter of the fine resin particles is not particularly limited and may be appropriately selected depending on the intended purpose. It is preferably 5 nm to 500 nm.

-External additive-

The toner of the present invention is formed of the base particles of particles (colored particles) that are granulated through, for example, desolvation of an emulsion or dispersion liquid of the toner material liquid (oil phase) in the aqueous medium (aqueous phase). Here, in order to improve flowability, developability, chargeability and cleanability of the toner containing the base particles, an external additive may be added and attached onto the surfaces of the base particles.

Examples of the external additive include fine inorganic particles and a cleanability improving agent.

--Fine inorganic particles--

The external additive for promoting flowability, developability and chargeability is preferably fine inorganic particles. The primary particle diameter of the fine inorganic particles is preferably 5 nm to 2 μm, more preferably 5 nm to 500 nm.

Examples of the fine inorganic particles include silica, alumina, titanium oxide, barium titanate, magnesium titanate, calcium titanate, strontium titanate, zinc oxide, tin oxide, silica sand, clay, mica, wollastonite, diatomaceous earth, chromium oxide, cerium oxide, red iron oxide, antimony trioxide, magnesium oxide, zirconium oxide, barium sulfate, barium carbonate, calcium carbonate, silicon carbide and silicon nitride.

The amount of the fine inorganic particles is not particularly limited and may be appropriately selected depending on the intended purpose. The amount of the fine inorganic particles is preferably 0.01% by mass to 5% by mass, more preferably 0.01% by mass to 2.0% by mass, with respect to the toner.

By subjecting the fine inorganic particles to a surface treatment to increase in hydrophobicity, the thus-treated fine inorganic particles can prevent the toner from being degraded in flowability and chargeability even under high-humidity conditions. Examples of preferred surface treatment agents include silane coupling agents, silylating agents, fluorinated alkyl group-containing silane coupling agents, organic titanate-containing coupling agents, aluminum-containing coupling agents, silicone oil and modified silicone oil.

--Cleanability improving agent--

The cleanability improving agent is applied to the image bearing member and the primary transfer medium for facilitating removal of the developer (toner) remaining thereon after transfer. Examples thereof include fatty acid metal salts such as zinc stearate and calcium stearate; and fine polymer particles produced through soap-free emulsification polymerization such as polymethyl methacrylate fine particles and polystyrene fine particles. The fine polymer particles preferably have a relatively narrow particle size distribution and a volume average particle diameter of 0.01 μm to 1 μm.

The toner can be formed of the base particles which are produced through a process including: dissolving or dispersing, in the organic solvent, the releasing agent and the ester bond-containing binder resin and/or the ester bond-containing binder resin precursor, to thereby prepare a toner material liquid (oil phase); emulsifying or dispersing the toner material liquid in the aqueous medium (aqueous phase); and performing desolvation for granulation. The base particles are produced by drying the granulated particles obtained after desolvation or by performing desolvation and drying at the same time. The base particles are classified if necessary, before they are used in toner particles.

The toner particles having different specific shapes; e.g., amorphous toner particles having an average circularity lower than 0.95 which is far from a spherical shape, cannot exhibit satisfactory transferability nor form high-quality images with no dust in some cases.

Notably, an appropriate measurement method for circularity is a method employing an optical detection zone, in which a suspension liquid containing particles is caused to pass through an image detection zone on a flat plate, and an image of the particles is optically detected with a CCD camera and then analyzed.

Here, the average circularity is a value calculated by dividing the circumferential length of a circle having the same area as the projected area obtained in this manner by the circumferential length of an actual particle. The average circularity of the above toner particles is preferably 0.95 to 0.99 for forming high-definition images having reproducibility at appropriate density. More preferably, the average circularity of the toner particles is 0.96 to 0.99, and the amount of particles having a circularity less than 0.96 is 10% by mass or less.

When the average circularity is 0.991 or more, cleaning failures occur on the image bearing member and the transfer belt in an image forming system using blade cleaning technique, potentially causing staining on the images. Such cleaning failures are not problematic for development and transfer of an image having a low image occupation rate, since the amount of the toner remaining after transfer is small. While, when forming an image having a high image occupation rate such as a photographic image, an untransferred toner due to a paper-feeding failure or the like accumulates on the image bearing member as residual toner after transfer, potentially causing background smear on images, or also contaminating a charging roller etc. that contact-charges the image bearing member whereby the charging roller etc. cannot exert their intrinsic chargeability.

The average circularity can be measured with, for example, a flow-type particle image analyzer FPIA-2000 (product of Sysmex Corp.).

One specific measurement method for the average circularity is as follows: 0.1 mL to 0.5 mL of a surfactant (preferably an alkylbenzene sulfonic acid salt) serving as a dispersing agent is added to a vessel containing 100 mL to 150 mL of water from which solid impurities have previously been removed; about 0.1 g to about 0.5 g of a measurement sample (toner particles) is added to the vessel; the resultant suspension liquid containing the sample dispersed therein is dispersed with an ultrasonic wave disperser for about 1 min to about 3 min to adjust the concentration of the dispersion liquid to 3,000 particles/μL to 10,000 particles/μL; and the thus-treated toner particles are measured for shape and distribution with the above analyzer.

The volume average particle diameter (Dv) of the base particles is not particularly limited and may be appropriately selected depending on the intended purpose. It is preferably 3.0 μm or more but less than 6.0 μm.

The ratio (Dv/Dn) of volume average particle diameter (Dv) to number average particle diameter (Dn) is preferably 1.05 to 1.25, more preferably 1.05 to 1.20.

The volume average particle diameter (Dv) and the number average particle diameter (Dn) can be measured with MULTISIZER III (product of Beckman Coulter, Inc.).

Use of toner particles containing the above base particles prevents contamination against charging members (e.g., a carrier and a charging blade), decrease in charging capability over time, and toner scattering. In addition, the toner particles are excellent in all of heat resistance storageability, low temperature fixability and hot offset resistance. Especially when used in a full-color copier, the toner particles form an image having excellent glossiness. Furthermore, for a two-component developer, the toner particles less change in particle diameter in the developer even after toner particles have been consumed and supplied repeatedly for a long period of time. As a result, the two-component developer containing the toner particles can exhibit good, stable developability even when stirred in the developing device for a long period of time.

Also, a one-component developer containing the toner particles less changes in particle diameter even after the toner particles have been consumed and supplied repeatedly. The one-component developer does not cause filming of the toner on a developing roller or fusion of the toner on a member for thinning a toner layer (e.g., a blade). The one-component developer can attain good, stable developability and image formation even when used (stirred) for a long period of time.

In general, toner particles having a smaller particle diameter are more advantageous in forming an image having high resolution and high quality. Such toner particles are disadvantageous in transferability and cleanability. When the volume average particle diameter is small (for example, the volume average particle diameter of the base particles is less than 3.0 μm), a two-component developer containing a carrier and a toner having a small volume average particle diameter causes fusion of the toner on the carrier and decreases charging capability of the carrier as a result of a long-term stirring in a developing device. A one-component developer containing a toner having a small volume average particle diameter easily causes filming of the toner on a developing roller and fusion of the toner on a member for thinning a toner layer (e.g., a blade). These phenomena arise also in a toner containing a large amount of fine powder (particles having much smaller particle diameter).

When the particle diameter of the toner is large (for example, the volume average particle diameter of the base particles exceeds 6.0 μm), it is difficult to obtain an image having high resolution and high quality. When the toner contained in the developer is consumed and supplied repeatedly, the variation in particle diameter of the toner particles becomes large in many cases. The same phenomenon arises in the case where the ratio (Dv/Dn) of volume average particle diameter (Dv) to number average particle diameter (Dn) of the base particles is more than 1.25. When the ratio Dv/Dn is less than 1.05, the toner cannot be satisfactorily charged and cleaned in some cases, although there is a favorable aspect that the toner is stabilized in behavior and is uniformly charged.

(Method for producing toner)

A method of the present invention for producing a toner is a method for producing the toner of the present invention. The method of the present invention includes a step of preparing a toner material liquid (toner material liquid-preparing step), a step of preparing an emulsion or dispersion liquid (emulsion or dispersion liquid-preparing step) and a step of removing a solvent (solvent-removing step); and, if necessary, further includes other steps.

<Toner material liquid-preparing step>

The toner material liquid-preparing step is not particularly limited and may be appropriately selected depending

on the intended purpose, so long as the toner material liquid-preparing step is a step of dissolving or dispersing, in an organic solvent, a releasing agent and at least one of an ester bond-containing binder resin and an ester bond-containing binder resin precursor to prepare a toner material liquid (oil phase).

The ester bond-containing binder resin is the ester bond-containing binder resin described above in relation to the toner of the present invention.

The ester bond-containing binder resin precursor is a resin precursor capable of producing the modified polyester described above in relation to the toner of the present invention. Examples thereof include a polyester having a functional group reactive with an active hydrogen group.

Examples of the polyester having a functional group reactive with an active hydrogen group include an isocyanate group-containing polyester.

The toner material liquid may contain, for example, a colorant, a masterbatch and a charge controlling agent.

The isocyanate group-containing polyester can be synthesized by, for example, the following method.

First, a hydroxyl group-containing polyester is synthesized. The hydroxyl group-containing polyester can be synthesized as follows, for example. Specifically, polyol (1) and polycarboxylic acid (2) are heated to 150°C to 280°C in the presence of a known esterification catalyst (e.g., tetrabutoxytitanate or dibutyltinoxide), optionally while the pressure is being reduced to remove water.

Next, the hydroxyl group-containing polyester is reacted with polyisocyanate (3) at 40°C to 140°C, whereby the isocyanate group-containing polyester can be obtained.

Examples of the polyol (1) include: alkylene glycols (e.g., ethylene glycol, 1,2-propylene glycol, 1,3-propylene glycol, 1,4-butanediol and 1,6-hexanediol); alkylene ether glycols (e.g., diethylene glycol, triethylene glycol, dipropylene glycol, polyethylene glycol, polypropylene glycol and polytetramethylene ether glycol); alicyclic diols (e.g., 1,4-cyclohexane dimethanol and hydrogenated bisphenol A); bisphenols (e.g., bisphenol A, bisphenol F and bisphenol S); adducts of the above-listed alicyclic diols with alkylene oxides (e.g., ethylene oxide, propylene oxide and butylene oxide); and adducts of the above-listed bisphenols with alkylene oxides (e.g., ethylene oxide, propylene oxide and butylene oxide).

These may be used alone or in combination.

Among them, preferred are C2-C12 alkylene glycols and adducts of the bisphenols with alkylene oxides (e.g., bisphenol A ethylene oxide 2 mol adduct, bisphenol A propylene oxide 2 mol adduct and bisphenol A propylene oxide 3 mol adduct).

A trihydric or higher polyol may be used as the polyol. Examples of the trihydric or higher polyol include polyvalent aliphatic alcohols (e.g., glycerin, trimethylolethane, trimethylolpropane, pentaerythritol and sorbitol); trihydric or higher phenols (e.g., phenol novolak and cresol novolak); and adducts of trihydric or higher polyphenols with alkylene oxides.

These may be used alone or in combination.

Examples of the polycarboxylic acid (2) include alkylene dicarboxylic acids (e.g., succinic acid, adipic acid and sebacic acid); alkenylene dicarboxylic acids (e.g., maleic acid and fumaric acid); and aromatic dicarboxylic acids (e.g., terephthalic acid, isophthalic acid and naphthalene dicarboxylic acid).

Among them, preferred are C4-C20 alkenylene dicarboxylic acids and C8-C20 aromatic dicarboxylic acids.

A tri or higher polycarboxylic acid may be used as the polycarboxylic acid. Examples of the tri or higher polycarboxylic acid include C9-C20 aromatic polycarboxylic acid (e.g., trimellitic acid and pyromellitic acid).

Notably, instead of the polycarboxylic acid, polycarboxylic anhydrides or lower alkyl esters (e.g., methyl ester, ethyl ester and isopropyl ester) may be used.

These may be used alone or in combination.

Examples of the polyisocyanate (3) include the isocyanating agents described in relation to the toner of the present invention.

Notably, when the unmodified polyester is used in combination, the unmodified polyester can be produced as the same method employed for the production of the hydroxyl group-containing polyester.

<Emulsion or dispersion liquid-preparing step>

The emulsion or dispersion liquid-preparing step is not particularly limited and may be appropriately selected depending on the intended purpose, so long as the emulsion or dispersion liquid-preparing step is a step of emulsifying or dispersing the toner material liquid (oil phase) in an aqueous medium (aqueous phase) to prepare an emulsion or dispersion liquid.

The aqueous medium is not particularly limited and may be appropriately selected depending on the intended purpose. The aqueous medium may be water alone or a mixture of water and a water-miscible solvent.

Examples of the water-miscible solvent include alcohols (e.g., methanol, isopropanol and ethylene glycol), dimethylformamide, tetrahydrofuran, cellosolves (e.g., methyl cellosolve) and lower ketones (e.g., acetone and methyl ethyl ketone).

The aqueous medium (aqueous phase) may contain a dispersing agent such as a surfactant and a polymeric

protective colloid described below.

When the amine and the isocyanate group-containing polyester serving as the ester bond-containing binder resin precursor are used in the method for producing the toner, the isocyanate group-containing polyester and the amine may be reacted together in the aqueous medium to form a modified polyester (a urea-modified polyester). Alternatively, the isocyanate group-containing polyester and the amine may be reacted together in advance to form a modified polyester (a urea-modified polyester).

The method for stably forming, in the aqueous medium, dispersoids formed of the urea-modified polyester or the isocyanate group-containing polyester and the amine is, for example, a method in which a toner material liquid containing the urea-modified polyester, other binder resins (e.g., crylstalline polyester) and a releasing agent or a toner material liquid containing the isocyanate group-containing polyester, the amine, other binder resins (e.g., crylstalline polyester) and a releasing agent is added to the aqueous medium, followed by dispersing through application of shearing force.

The isocyanate group-containing polyester may be mixed with other toner materials such as a colorant (or a colorant masterbatch), a crystalline polyester, an unmodified polyester and a charge controlling agent when forming dispersoids in an aqueous medium. Preferably, the toner materials are previously mixed together and then the resultant mixture is dispersed in an aqueous medium.

Also, in the above-described toner production method, the toner materials such as a colorant and a charge controlling agent are not necessarily added to an aqueous medium before particle formation. These toner materials may be added thereto after particle formation. For example, after particles containing no colorant have been formed, a colorant may be added to the obtained particles with a known dying method.

The emulsification or dispersion method is not particularly limited and may use a known disperser such as a low-speed shearing disperser, a high-speed shearing disperser, a friction disperser, a high-pressure jetting disperser or an ultrasonic disperser. The method using a high-speed shearing disperser is preferably employed in order for the dispersoids to be dispersed so as to have a particle diameter of 2 μm to 20 μm.

In use of the high-speed shearing disperser, the rotating speed is not particularly limited and may be appropriately selected depending on the intended purpose. It is generally 1,000 rpm to 30,000 rpm, preferably 5,000 rpm to 20,000 rpm.

The dispersion time is not particularly limited and may be appropriately selected depending on the intended purpose. It is generally 0.1 min to 5 min when a batch method is employed.

The temperature during dispersion is not particularly limited and may be appropriately selected depending on the intended purpose. It is generally 0°C to 150°C (in a pressurized state), preferably from 40°C to 98°C. The temperature is preferably higher, since the emulsion or dispersion liquid formed of the urea-modified polyester (modified polyester (i)) and the isocyanate group-containing polyester has a lower viscosity and thus can be readily dispersed.

The amount of the aqueous medium used is not particularly limited and may be appropriately selected depending on the intended purpose. It is generally 50 parts by mass to 2,000 parts by mass, preferably 100 parts by mass to 1,000 parts by mass, per 100 parts by mass of the toner material liquid. When the amount of the aqueous medium used is less than 50 parts by mass, the toner material liquid cannot be sufficiently dispersed, resulting in failure to form toner particles having a predetermined particle diameter. Meanwhile, use of the aqueous medium in an amount of more than 2,000 parts by mass is economically disadvantageous.

If necessary, a dispersing agent may be used. Use of the dispersant is preferred from the viewpoints of attaining a sharp particle size distribution and realizing a stable dispersion state.

In the step of synthesizing the urea-modified polyester (modified polyester (i)) from the isocyanate group-containing polyester and the amine, the amine may be previously added to the aqueous medium, and then the toner material liquid containing the isocyanate group-containing polyester may be dispersed for reaction in the aqueous medium.

Alternatively, the toner material liquid containing the isocyanate group-containing polyester may be added to the aqueous medium and then the amine may be added to the aqueous medium (so that reaction occurs from the interfaces between particles). In this case, the urea-modified polyester is formed preferentially in the surfaces of the formed base particles. As a result, the concentration gradient can be formed in each particle.

A surfactant may be used as a dispersing agent for emulsifying or dispersing, in an aqueous medium, a toner material liquid containing the toner materials (toner composition) dispersed therein.

Examples of the surfactant include anionic surfactants such as alkylbenzenesulfonic acid salts, α-olefin sulfonic acid salts and phosphoric acid esters; cationic surfactants such as amine salts (e.g., alkyl amine salts, aminoalcohol fatty acid derivatives, polyamine fatty acid derivatives and imidazoline) and quaternary ammonium salts (e.g., alkyltrimethylammonium salts, dialkyl dimethylammonium salts, alkyl dimethyl benzyl ammonium salts, pyridinium salts, alkyl isoquinolinium salts and benzethonium chloride); nonionic surfactants such as fatty acid amide derivatives and polyhydric alcohol derivatives; and amphoteric surfactants such as alanine, dodecyldi(aminoethyl)glycine, di(octylaminoethyl)glycine and N-alkyl-N,N-dimethylammonium betaine.

Also, use of a fluoroalkyl group-containing anionic surfactant as the anionic surfactant can provide advantageous

effects even in a considerably small amount.

The fluoroalkyl group-containing anionic surfactant is not particularly limited and may be appropriately selected depending on the intended purpose. Examples thereof include fluoroalkyl carboxylic acids having 2 to 10 carbon atoms and metal salts thereof, disodium perfluorooctanesulfonylglutamate, sodium 3-[omega-fluoroalkyl(C6 to C11)oxy)-1-alkyl(C3 or C4) sulfonates, sodium 3-[omega-fluoroalkanoyl(C6 to C8)-N-ethylamino]-1-propanesulfonates, fluoroalkyl(C11 to C20) carboxylic acids and metal salts thereof, perfluoroalkylcarboxylic acids(C7 to C13) and metal salts thereof, perfluoroalkyl(C4 to C12)sulfonate and metal salts thereof, perfluorooctanesulfonic acid diethanol amide, N-propyl-N-(2-hydroxyethyl)perfluorooctanesulfone amide, perfluoroalkyl(C6 to C10) sulfoneamidepropyltrimethylammonium salts, salts of perfluoroalkyl(C6 to C10)-N-ethylsulfonylglycin and monoperfluoroalkyl(C6 to C16) ethylphosphates.

Examples of commercially available products thereof include SURFLON S-111, S-112 and S-113 (these products are of Asahi Glass Co., Ltd.); FRORARD FC-93, FC-95, FC-98 and FC-129 (these products are of Sumitomo 3M Ltd.); UNIDYNE DS-101 and DS-102 (these products are of Daikin Industries, Ltd.); MEGAFACE F-110, F-120, F-113, F-191, F-812 and F-833 (these products are of DIC, Inc.); EFTOP EF-102, 103, 104, 105, 112, 123A, 123B, 306A, 501, 201 and 204 (these products are of Tohchem Products Co., Ltd.); and FUTARGENT F-100 and F150 (these products are of NEOS COMPANY LIMITED).

Examples of the cationic surfactants include fluoroalkyl group-containing primary, secondary or tertiary aliphatic amine acids, aliphatic quaternary ammonium salts (e.g., perfluoroalkyl(C6 to C10)sulfoneamide propyltrimethylammonium salts), benzalkonium salts, benzetonium chloride, pyridinium salts and imidazolinium salts.

Examples of commercially available products thereof include SURFLON S-121 (product of Asahi Glass Co., Ltd.); FRORARD FC-135 (product of Sumitomo 3M Ltd.); UNIDYNE DS-202 (product of Daikin Industries, Ltd.); MEGAFACE F-150 and F-824 (these products are of DIC, Inc.); EFTOP EF-132 (product of Tohchem Products Co., Ltd.); and FUTARGENT F-300 (product of Neos COMPANY LIMITED).

In addition, poorly water-soluble inorganic dispersing agents may be used. Examples of the poorly water-soluble inorganic dispersing agents usable include tricalcium phosphate, calcium carbonate, titanium oxide, colloidal silica and hydroxyapatite.

Further, a polymeric protective colloid may be used to stabilize liquid droplets. Examples of the polymeric protective colloid include homopolymers and copolymers. Examples of monomers usable for the homopolymers and copolymers include acids (e.g., acrylic acid, methacrylic acid, α-cyanoacrylic acid, α-cyanomethacrylic acid, itaconic acid, crotonic acid, fumaric acid, maleic acid and maleic anhydride), hydroxyl group-containing (meth)acrylic monomers (e.g., β-hydroxyethyl acrylate, β-hydroxyethyl methacrylate, β-hydroxypropyl acrylate, β-hydroxypropyl methacrylate, γ-hydroxypropyl acrylate, γ-hydroxypropyl methacrylate, 3-chloro-2-hydroxypropyl acrylate, 3-chloro-2-hydroxypropyl methacrylate, diethylene glycol monoacrylic acid esters, diethylene glycol monomethacrylic acid esters, glycerin monoacrylic acid esters, glycerin monomethacrylic acid esters, N-methylolacrylamide and N-methylolmethacrylamide), vinyl alcohol and ethers thereof (e.g., vinyl methyl ether, vinyl ethyl ether and vinyl propyl ether), esters formed between vinyl alcohol and a carboxyl group-containing compound (e.g., vinyl acetate, vinyl propionate and vinyl butyrate), acrylamide, methacrylamide, diacetoneacrylamide and methylol compounds of them; acid chlorides (e.g., acrylic acid chloride and methacrylic acid chloride) and nitrogen-containing compounds and nitrogen-containing heterocyclic compounds (e.g., vinyl pyridine, vinyl pyrrolidone, vinyl imidazole and ethyleneimine).

Examples of the polymeric protective colloid include polyoxyethylenes (e.g., polyoxyethylenes, polyoxypropylenes, polyoxyethylene alkyl amines, polyoxypropylene alkyl amines, polyoxyethylene alkyl amides, polyoxypropylene alkyl amides, polyoxyethylene nonylphenyl ethers, polyoxyethylene laurylphenyl ethers, polyoxyethylene stearylphenyl esters and polyoxyethylene nonylphenyl esters); and celluloses (e.g., methyl cellulose, hydroxyethyl cellulose and hydroxypropyl cellulose).

When an acid- or alkali-soluble compound (e.g., calcium phosphate) is used as a dispersion stabilizer, the calcium phosphate used is dissolved with an acid (e.g., hydrochloric acid), followed by washing with water, to thereby remove it from the formed fine particles. Also, the calcium phosphate may be removed through enzymatic decomposition.

Alternatively, the dispersing agent used may remain on the surfaces of the toner particles. However, the dispersing agent is preferably removed through washing in terms of chargeability of the formed toner.

In order to decrease the viscosity of the toner material liquid (oil phase) containing the toner materials (toner composition) dissolved or dispersed therein, a solvent capable of dissolving the modified polyester (i) and the isocyanate group-containing polyester may be additionally used. Use of such a solvent is preferred since a sharp particle size distribution can be attained. The solvent used is preferably a volatile solvent having a boiling point lower than 100°C from the viewpoint of easily removing the solvent.

Examples of the solvent include toluene, xylene, benzene, carbon tetrachloride, methylene chloride, 1,2-dichloroethane, 1,1,2-trichloroethane, trichloroethylene, chloroform, monochlorobenzene, dichloroethylidene, methyl acetate, ethyl acetate, methyl ethyl ketone and methyl isobutyl ketone.

These may be used alone or in combination.

Among them, the solvent is preferably an aromatic solvent such as toluene or xylene; or a halogenated hydrocarbon such as methylene chloride, 1,2-dichloroethane, chloroform or carbon tetrachloride.

The amount of the solvent used is not particularly limited and may be appropriately selected depending on the intended purpose. The amount of the solvent used is generally 0 parts by mass to 300 parts by mass, preferably 0 parts by mass to 100 parts by mass, more preferably 25 parts by mass to 70 parts by mass, per 100 parts of the isocyanate group-containing polyester. When the solvent is used, the solvent is preferably removed with heating under normal or reduced pressure after completion of elongation and/or crosslinking reaction of the isocyanate group-containing polyester.

The time of the elongation and/or crosslinking reaction of the isocyanate group-containing polyester is appropriately selected depending on, for example, reactivity between the isocyanate group-containing moiety of the isocyanate group-containing polyester and the amine, and is generally 10 min to 40 hours, preferably 2 hours to 24 hours.

The reaction temperature of the elongation and/or crosslinking reaction is not particularly limited and may be appropriately selected depending on the intended purpose. It is generally 0°C to 150°C, preferably 40°C to 98°C.

If necessary, a known catalyst may be used in the elongation and/or crosslinking reaction. Examples of the catalyst include dibutyltinlaurate and dioctyltinlaurate.

<Solvent-removing step>

The solvent-removing step is not particularly limited and may be appropriately selected depending on the intended purpose, so long as the solvent-removing step is a step of removing the organic solvent from the emulsion or dispersion liquid to form base particles.

The method for removing the organic solvent from the emulsion or dispersion liquid is not particularly limited and may be appropriately selected depending on the intended purpose. There can be employed a method in which the entire system is gradually increased in temperature to completely evaporate off the organic solvent contained in the liquid droplets. Alternatively, there can be employed a method in which the emulsion or dispersion liquid is sprayed to a dry atmosphere, to thereby completely evaporate off the water-insoluble organic solvent contained in the liquid droplets to form fine particles of base particles as well as evaporate off the aqueous dispersing agent.

The dry atmosphere to which the emulsion or dispersion liquid is sprayed generally uses heated gas (e.g., air, nitrogen, carbon dioxide and combustion gas), especially, gas flow heated to a temperature equal to or higher than the highest boiling point of the solvents used. Treatments performed even in a short time using, for example, a spray dryer, a belt dryer or a rotary kiln allow the resultant product to have satisfactory quality.

<Other steps>

Examples of the other steps include a washing and drying step and a classifying step.

-Washing and drying step-

The washing and drying step is not particularly limited and may be appropriately selected depending on the intended purpose, so long as the washing and drying step is a step of washing and drying the base particles obtained through the solvent-removing step.

-Classifying step-

The classifying step is not particularly limited and may be appropriately selected depending on the intended purpose, so long as the classifying step is a step of performing classification after the washing and drying step.

Even when the dispersoids having a broad particle size distribution are obtained during emulsifying or dispersing and are then subjected to the washing and drying step while the particle size distribution is being maintained, the dispersoids may be subjected to the classifying step so as to have a desired particle size distribution.

Examples of the classifying step include a step of removing fine particles of unnecessary size using, for example, a cyclone, a decanter or a centrifuge. The classification may be performed in the form of powder after drying, but is preferably performed in liquid in terms of efficiency. The classified fine or coarse particles of unnecessary size may be used again for formation of base particles. Here, the fine or coarse particles may be in a wet or dry state.

The dispersing agent used at the emulsion or dispersion liquid-preparing step is preferably removed from the obtained dispersion liquid to the greatest extent possible. The dispersing agent is may be removed at the classifying step.

The obtained powder after drying (base particles) is optionally mixed with foreign particles such as fine particles of the releasing agent, charge-controlling fine particles, fine particles of the fluidizing agent and colorant fine particles, optionally the resultant mixture is allowed to receive mechanical impact, so that the foreign particles are fixed or fused on the base particles, to thereby obtain toner particles formed of the base particles (toner particles containing the base particles). The application of mechanical impact can prevent the foreign particles from being exfoliated from the surfaces

of the obtained toner particles containing base particles.

Examples of the method for applying mechanical impact include a method in which an impact is applied to a mixture using a high-speed rotating blade and a method in which a mixture is caused to pass through a high-speed airflow for acceleration and aggregated particles or complex particles are crushed against an appropriate collision plate.

Examples of apparatuses used for applying mechanical impact include ONGMILL (product of Hosokawa Micron Corp.), an apparatus produced by modifying an I-type mill (product of Nippon Neumatic Co., Ltd.) so that the pulverizing air pressure thereof is decreased, HYBRIDIZATION SYSTEM (product of Nara Machinery Co., Ltd.), CRYPTRON SYSTEM (production of Kawasaki Heavy Industries, Ltd.) and an automatic mortar.

(Developer)

A developer of the present invention contains the above-described toner of the present invention; and, if necessary, further contains other ingredients such as a carrier (magnetic carrier).

The developer may be a one-component developer consisting of the toner or may be a two-component developer.

When the developer is used as a two-component developer, the ratio between the carrier and the toner contained in the developer is not particularly limited and may be appropriately selected depending on the intended purpose. The amount of the toner is 1 part by mass to 10 parts by mass per 100 parts by mass of the carrier.

The carrier is not particularly limited and may be appropriately selected depending on the intended purpose. Examples thereof include iron powder, ferrite powder, magnetite powder and magnetic resin carriers.

The carrier is preferably coated. Examples of the coating material used include urea-formaldehyde resins, melamine resins, benzoguanamine resins, urea resins, polyamide resins and epoxy resins.

Further examples of the coating material include acryl resins, polymethyl methacrylate resins, polyacrylonitrile resins, polyvinyl acetate resins, polyvinyl alcohol resins and polyvinyl butyral resins; halogenated olefin resins such as polyvinyl chloride; polyester-based resins such as polyethylene terephthalate resins and polybutyrene terephthalate resins; polycarbonate-based resins, polyethylene resins, polyvinyl fluoride resins, polyvinylidene fluoride resins, polytrifluoroethylene resins, polyhexafluoropropylene resins, copolymers of vinylidene fluoride and an acryl monomer, copolymers of vinylidene fluoride and vinyl fluoride, fluoroterpolymers of tetrafluoroethylene, vinylidene fluoride and a nonfluorinated monomer; and silicone resins.

If necessary, conductive powder, etc. may be incorporated into the coating material. The conductive powder usable is, preferably, metal powder, carbon black, titanium oxide, tin oxide and zinc oxide. The average particle diameter of the conductive powder is preferably 1 μm or lower. When the average particle diameter exceeds 1 μm, it may be difficult to control electrical resistance.

(Developer-housing container)

The developer-housing container of the present invention is not particularly limited and may be appropriately selected depending on the intended purpose, so long as it is a container housing the developer of the present invention. Examples of the container include a container having a container main body and a cap.

The shape, structure, material, etc. of the container main body are not particularly limited and may be appropriately selected depending on the intended purpose.

<Shape>

The shape thereof is not particularly limited and may be appropriately selected depending on the intended purpose. The container main body preferably has, for example, a hollow-cylindrical shape. Particularly preferably, it is a hollow-cylindrical body whose inner surface has spirally-arranged concavo-convex portions some or all of which can accordion and in which a developer accommodated can be transferred to an outlet port through rotation.

<Material>

The material thereof is not particularly limited and may be appropriately selected depending on the intended purpose. It is preferably a material with high dimensional accuracy. Examples of the material include polyester resins, polyethylene resins, polypropylene resins, polystyrene resins, polyvinyl chloride resins, polyacryl resins, polycarbonate resins, ABS resins and polyacetal resins.

<Use>

The toner-housing container has excellent handleability; i.e., is suitable for storage, transportation, etc. and is suitably used for supplying a developer with being detachably mounted to a process cartridge, an image forming apparatus, etc.
The developer-housing container may be used as a toner container housing the above-described toner.

(Image forming method)

An image forming method of the present invention includes: a step of charging a surface of an image bearing member; a step of exposing the charged surface of the image bearing member to light to form a latent electrostatic image on the image bearing member; a step of developing the latent electrostatic image formed on the image bearing member with a developer containing a toner to form a toner image on the image bearing member; a step of transferring the toner image onto a recording medium; and a step of fixing the transferred image on the recording medium; and, if necessary, further includes other steps.
The above toner is the toner of the present invention.
The image forming method is performed by, for example, an electrophotographic image forming apparatus schematically illustrated in Fig. 1. Next will be described the schematic configuration of the image forming apparatus illustrated in Fig. 1.
While an image bearing member 1 is being rotated in a direction indicated by the arrow, the surface of the image bearing member is uniformly charged with a charging member 2. Next, the image bearing member 1 is irradiated with image light r from an exposing unit at an exposing region located downstream of the charging member 2 in the rotation direction of the image bearing member. Through this light irradiation, charges disappear at regions of the image bearing member surface which have been irradiated with the image light r. As a result, a latent electrostatic image corresponding to the image light is formed on the surface of the image bearing member 1.
A developing device 3 serving as a developing unit is disposed downstream of the exposing region. The developing device 3 houses a toner 4 as a developer. The toner 4 is stirred/mixed with a paddle (stirring mechanism) 14 equipped with a conveying screw 13 to be frictionally charged so as to have a predetermined polarity. Then, the toner is conveyed with a developing sleeve 5 to a nip portion (developing region) between the developing sleeve 5 and the image bearing member 1. The toner conveyed to the developing region is transferred from the surface of the developing sleeve 5 to the surface of the image bearing member 1 by the action of a developing electrical field formed at the developing region with a developing bias applying unit, whereby the toner is attached onto the image bearing member surface. As a result, the latent electrostatic image formed on the image bearing member surface is developed to be a toner image (visible image).
The toner image formed on the image bearing member 1 in this manner is transferred onto a transfer paper sheet S serving as a recording medium. Prior to the image transfer, the transfer paper sheet is fed with a registration roller 18 to a transfer region, which is a nip portion between the image bearing member 1 and a transfer conveyance belt 6 (serving as a transfer unit) disposed downstream of the developing device 3 so as to be in close contact with the image bearing member 1. Then, the toner image transferred onto the transfer paper sheet is fixed with a fixing roller (serving as a fixing unit) disposed downstream of the transfer conveyance belt 6 in the rotation direction thereof. Thereafter, the transfer paper sheet is discharged with a discharging unit onto a discharge tray outside the main body of the apparatus. Note that reference numeral 6a in Fig. 1 denotes a bias roller.
The toner remaining on the image bearing member 1 (residual toner), which has not been transferred onto the transfer paper sheet at the transfer region, is removed from the image bearing member 1 with a cleaning device (serving as a cleaning unit) including a cleaning blade 7, a recovering spring 8 and a recovering coil 9, which is disposed downstream of the transfer region in the rotation direction of the image bearing member. Also, the residual charges remaining on the image bearing member 1 after cleaning of the residual toner are eliminated with a charge-eliminating device 20 including a charge-eliminating lamp. In Fig. 1, reference numeral 16 denotes a reflection concentration detection sensor (P sensor), reference numeral 17 denotes a toner concentration sensor, and reference numeral 10 denotes an image bearing member and a cleaning unit (PCU).

Examples

The present invention will next be described by way of Examples, which should not be construed as limiting the present invention thereto. Unless otherwise specified, the unit "part(s)" means "part(s) by mass" and the unit "%" means "% by mass."
First, materials necessary for forming toners of Examples and Comparative Examples were produced as follows.

[Synthesis Example of synthetic ester wax (alkyl monoester compound)]

(Synthesis Example 1)

Stearic acid (special grade reagent, product of Kishida Chemical Co., Ltd.) (284 g, 1 mol), stearyl alcohol (special grade reagent, product of Kishida Chemical Co., Ltd.) (256 g, 1 mol) and sulfuric acid (20 mL) were placed in a round-bottom flask equipped with a stirrer and a condenser, followed by refluxing at 130°C for 4 hours while the formed water was being removed. The resultant product was purified with dimethyl ether to thereby obtain [synthetic ester wax (1)].

(Synthesis Example 2)

Behenic acid (EP grade, product of Tokyo Chemical Industry Co., Ltd.) (340 g, 1 mol), cetyl alcohol (special grade reagent, product of Kishida Chemical Co., Ltd.) (242 g, 1 mol) and sulfuric acid (20 mL) were placed in a round-bottom flask equipped with a stirrer and a condenser, followed by refluxing at 130°C for 4 hours while the formed water was being removed. The resultant product was purified with diisopropyl ether to thereby obtain [synthetic ester wax (2)].

(Synthesis Example 3)

Behenic acid (EP grade, product of Tokyo Chemical Industry Co., Ltd.) (340 g, 1 mol), stearyl alcohol (special grade reagent, product of Kishida Chemical Co., Ltd.) (256 g, 1 mol) and sulfuric acid (20 mL) were placed in a round-bottom flask equipped with a stirrer and a condenser, followed by refluxing at 150°C for 5 hours while the formed water was being removed. The resultant product was purified with diisopropyl ether to thereby obtain [synthetic ester wax (3)].

(Synthesis Example 4)

Behenic acid (EP grade, product of Tokyo Chemical Industry Co., Ltd.) (340 g, 1 mol), eicosanol (EP grade, product of Tokyo Chemical Industry Co., Ltd.) (284 g, 1 mol) and sulfuric acid (20 mL) were placed in a round-bottom flask equipped with a stirrer and a condenser, followed by refluxing at 200°C for 5 hours while the formed water was being removed. The resultant product was purified with diisopropyl ether to thereby obtain [synthetic ester wax (4)].

(Synthesis Example 5)

Stearic acid (special grade reagent, product of Kishida Chemical Co., Ltd.) (284 g, 1 mol), cetyl alcohol (special grade reagent, product of Kishida Chemical Co., Ltd.) (242 g, 1 mol) and sulfuric acid (20 mL) were placed in a round-bottom flask equipped with a stirrer and a condenser, followed by refluxing at 200°C for 5 hours while the formed water was being removed. The resultant product was purified with diisopropyl ether to thereby obtain [synthetic ester wax (5)].

(Synthesis Example 6)

Myristic acid (EP grade reagent, product of Tokyo Chemical Industry Co., Ltd.) (228 g, 1 mol), cetyl alcohol (special grade reagent, product of Kishida Chemical Co., Ltd.) (242 g, 1 mol) and and sulfuric acid (20 mL) were placed in a round-bottom flask equipped with a stirrer and a condenser, followed by refluxing at 200°C for 5 hours while the formed water was being removed. The resultant product was purified with diisopropyl ether to thereby obtain [synthetic ester wax (6)].

(Synthesis Example 7)

Myristic acid (EP grade reagent, product of Tokyo Chemical Industry Co., Ltd.) (228 g, 1 mol), myristyl alcohol (CONOL 1495, product of New Japan Chemical Co., Ltd.) (200 g, 1 mol) and and sulfuric acid (20 mL) were placed in a round-bottom flask equipped with a stirrer and a condenser, followed by refluxing at 200°C for 5 hours while the formed water was being removed. The resultant product was purified with diisopropyl ether to thereby obtain [synthetic ester wax (7)].

The following Table 1 shows the carbon number distribution of each of the above-produced synthetic ester waxes (1) to (7) (i.e., the amounts (% by mass) of alkyl monoester compounds having carbon atoms whose numbers are shown in Table 1). The following Table 2 shows their physical properties.

Table 1

| | | Number of synthetic ester wax | | | | | | |
|---|---|---|---|---|---|---|---|---|
| | | 1 | 2 | 3 | 4 | 5 | 6 | 7 |
| Number of carbon atoms in the molecule | C46≤ | 0 | 0 | 0.9 | 0.7 | 0 | 0 | 0 |
| | C42 | 0 | 0 | 0.6 | 88.8 | 0 | 0 | 0 |
| | C40 | 0 | 1.5 | 87.3 | 6.8 | 0 | 0 | 0 |
| | C38 | 0.5 | 89.3 | 7.6 | 0.9 | 0 | 0 | 0 |
| | C36 | 89.9 | 6.7 | 0.4 | 0 | 1.0 | 0 | 0 |
| | C34 | 3.9 | 0.5 | 0 | 0 | 88.8 | 0.3 | 0 |
| | C32 | 0.3 | 0 | 0 | 0 | 5.2 | 2.1 | 0.2 |
| | C30 | 0 | 0 | 0 | 0 | 0.6 | 86.5 | 3.3 |
| | C28 | 0 | 0 | 0 | 0 | 0 | 8.2 | 83.7 |
| | C26 | 0 | 0 | 0 | 0 | 0 | 0.3 | 7.2 |
| | C24 | 0 | 0 | 0 | 0 | 0 | 0 | 1.3 |
| | C22 | 0 | 0 | 0 | 0 | 0 | 0 | 0.2 |
| | ≤C20 | 5.4 | 2.0 | 3.2 | 2.8 | 4.4 | 2.6 | 4.1 |

The carbon number distribution of each synthetic ester wax was measured through $^{13}C$-NMR using a nuclear magnetic resonance spectrometer (product of JEOL Ltd.).

Table 2

| | Number of synthetic ester wax | | | | | | |
|---|---|---|---|---|---|---|---|
| | 1 | 2 | 3 | 4 | 5 | 6 | 7 |
| Melting point (°C) | 63 | 67 | 70 | 74 | 60 | 55 | 52 |
| Melt viscosity (100°C) mPa·s | 6 | 7 | 9 | 11 | 8 | 5 | 6 |
| AV (acid value, mgKOH/g) | 3.3 | 1.8 | 5.1 | 4.3 | 4.1 | 2.2 | 4.2 |
| OHV (hydroxyl value, mgKOH/g) | 3 | 0.8 | 6.1 | 3.5 | 3.2 | 5 | 3.8 |

The melting point was obtained based on the endothermic peak temperature at which the amount of heat absorbed becomes maximum in a differential scanning calorimetry curve obtained through differential scanning calorimetry (DSC).

The melt viscosity at 100°C was measured with a Brookfield rotational viscometer.

[Preparation of aqueous phase]

(Synthesis Example 8)

<Synthesis of emulsion of fine organic particles>

A reaction container to which a stirring rod and a thermometer had been set was charged with 700 parts of water, 12 parts of a sodium salt of sulfate of an ethylene oxide adduct of methacrylic acid (Eleminol RS-30, product of Sanyo Chemical Industries, Ltd.), 140 parts of styrene, 140 parts of methacrylic acid and 1.5 parts of ammonium persulfate. The resultant mixture was stirred at 450 rpm for 20 min. The system of the obtained white emulsion was increased in temperature to 75°C, followed by reaction for 5 hours. Then, 35 parts of a 1% aqueous ammonium persulfate solution was added to the resultant emulsion, and the resultant mixture was aged at 75°C for 5 hours, to thereby obtain an aqueous dispersion liquid of a vinyl resin (copolymer of styrene-methacrylic acid-sodium salt of sulfate of an ethylene oxide adduct of methacrylic acid) [fine particle dispersion liquid 1].

Through measurement with LA-920 (laser diffraction/scattering particle size analyzer, product of HORIBA, Ltd.), the [fine particle dispersion liquid 1] was found to have a volume average particle diameter of 0.30 μm. Part of the [fine particle dispersion liquid 1] was dried to isolate resin. This resin was found to have a Tg of 155°C.

<Preparation of aqueous phase>

Water (1,000 parts), 85 parts of the [fine particle dispersion liquid 1]), 40 parts of a 50% aqueous solution of sodium dodecyldiphenylethersulfonate (Eleminol MON-7, product of Sanyo Chemical Industries, Ltd.) and 95 parts of ethyl acetate were mixed together to prepare a milky white liquid, which was used as [aqueous phase 1].

[Synthesis of low-molecular-weight polyester 1 <hydroxyl group-containing polyester>]

(Synthesis Example 9)

A reaction container equipped with a condenser, a stirrer and a nitrogen-introducing tube was charged with 235 parts of bisphenol A ethylene oxide 2 mol adduct, 535 parts of bisphenol A propylene oxide 3 mol adduct, 215 parts of terephthalic acid, 50 parts of adipic acid and 3 parts of dibutyltinoxide. The resultant mixture was allowed to react at 240°C for 10 hours under normal pressure and then at a reduced pressure of 10 mmHg to 20 mmHg for 6 hours. Thereafter, 45 parts of trimellitic anhydride was added to the reaction container, followed by reaction at 185°C for 3 hours under normal pressure, to thereby produce [low-molecular-weight polyester 1].

The [low-molecular-weight polyester 1] was found to have a number average molecular weight of 2,800, a weight average molecular weight of 7,100, a Tg of 45°C and an acid value of 22 mgKOH/g.

[Synthesis of low-molecular-weight polyester 2 <hydroxyl group-containing polyester>]

(Synthesis Example 10)

A reaction container equipped with a condenser, a stirrer and a nitrogen-introducing tube was charged with 125 parts of propylene glycol, 632 parts of bisphenol A propylene oxide 3 mol adduct, 150 parts of terephthalic acid, 100 parts of adipic acid and 3 parts of dibutyltinoxide. The resultant mixture was allowed to react at 240°C for 10 hours under normal pressure and then at a reduced pressure of 10 mmHg to 20 mmHg for 6 hours. Thereafter, 65 parts of trimellitic anhydride was added to the reaction container, followed by reaction at 185°C for 3 hours under normal pressure, to thereby produce [low-molecular-weight polyester 2].

The [low-molecular-weight polyester 2] was found to have a number average molecular weight of 3,500, a weight average molecular weight of 8,200, a Tg of 55°C and an acid value of 32 mgKOH/g.

[Synthesis of styrene acryl resin 1]

(Synthesis Example 11)

A reaction container equipped with a condenser, a stirrer and a nitrogen-introducing tube was charged with 700 parts of a styrene monomer, 300 parts of n-butyl methacrylate, 1,000 parts of toluene, 10 parts of methacrylic acid, 3 parts of azobisisobutylonitrile and 0.2 parts of dodecylmercaptan. The resultant mixture was allowed to react under normal pressure at 90°C for 10 hours and then at 120°C for 6 hours. The obtained resin solution was treated at 50°C and a reduced pressure of 10 mmHg to 20 mmHg for 6 hours to remove toluene, to thereby obtain [styrene acryl resin 1].

The [styrene acryl resin 1] was found to have a number average molecular weight of 4,300, a weight average molecular weight of 8,600, a Tg of 62°C and an acid value of 15 mgKOH/g.

[Synthesis of intermediate polyester]

(Synthesis Example 12)

A reaction container equipped with a condenser, a stirrer and a nitrogen-introducing tube was charged with 700 parts of bisphenol A ethylene oxide 2 mol adduct, 85 parts of bisphenol A propylene oxide 2 mol adduct, 300 parts of terephthalic acid, 25 parts of trimellitic anhydride and 3 parts of dibutyltinoxide. The resultant mixture was allowed to react at 240°C for 10 hours under normal pressure and then at a reduced pressure of 10 mmHg to 20 mmHg for 6 hours, to thereby obtain [intermediate polyester 1].

The [intermediate polyester 1] was found to have a number average molecular weight of 2,500, a weight average

molecular weight of 10,000, a Tg of 58°C, an acid value of 0.5 mgKOH/g and a hydroxyl value of 52 mgKOH/g.

[Synthesis of isocyanate group-containing polyester (prepolymer)]

(Synthesis Example 13)

Next, a reaction container equipped with a condenser, a stirrer and a nitrogen-introducing tube was charged with 400 parts of the [intermediate polyester 1], 90 parts of isophoron diisocyanate and 500 parts of ethyl acetate. The resultant mixture was allowed to react at 110°C for 6 hours to obtain [prepolymer 1].

The amount of the free isocyanate contained in the [prepolymer 1] was found to be 1.67% by mass, and the solid content of the [prepolymer 1] was found to be 50%.

[Synthesis of crystalline polyester]

(Synthesis Example 14)

A 5-L four-necked flask equipped with a nitrogen-introducing tube, a dehydrating tube, a stirrer and a thermocouple was charged with 1,4-butanediol (28 mol), fumaric acid (24 mol), trimellitic anhydride (1.80 mol) and hydroquinone (6.0 g), followed by reaction at 150°C for 6 hours. The reaction mixture was allowed to react at 200°C for 1 hour, and further react at 8.3 kPa for 1 hour, to thereby obtain [crystalline polyester 1].

The [crystalline polyester 1] was found to have a melting point of 125°C (endothermic peak temperature in DSC), a number average molecular weight of 1,800, a weight average molecular weight of 6,000, an acid value of 26 mgKOH/g and a hydroxyl value of 30 mgKOH/g.

(Synthesis Example 15)

A 5-L four-necked flask equipped with a nitrogen-introducing tube, a dehydrating tube, a stirrer and a thermocouple was charged with 1,10-decanediol (13 mol), 1,8-octanediol (17 mol), fumaric acid (26 mol), trimellitic anhydride (1.80 mol) and 4.9 g of hydroquinone, followed by reaction at 180°C for 10 hours. The reaction mixture was allowed to react at 200°C for 3 hours, and further react at 8.3 kPa for 2 hours, to thereby synthesize [crystalline polyester 2].

The [crystalline polyester 2] was found to have a melting point of 70°C (endothermic peak temperature in DSC), a number average molecular weight of 3,000, a weight average molecular weight of 10,000, an acid value of 21 mgKOH/g and a hydroxyl value of 28 mgKOH/g.

[Synthesis of ketimine]

(Synthesis Example 16)

A reaction container to which a stirring rod and a thermometer had been set was charged with 180 parts of isophorondiamine and 80 parts of methyl ethyl ketone, followed by reaction at 50°C for 6 hours, to thereby obtain [ketimine compound 1].

The [ketimine compound 1] was found to have an amine value of 420.

[Synthesis of masterbatch (MB)]

(Synthesis Example 17)

Water (1,300 parts), 550 parts of carbon black (Printex35, product of Deggusa Co.) (DBP oil-absorption amount = 43 mL/100 mg, pH = 9.5) and 1,300 parts of the low-molecular-weight polyester 1 were mixed together using HENSCHEL MIXER (product of Mitsui Mining Co.). Using a two-roll mill, the resultant mixture was kneaded at 160°C for 45 min, followed by calendering, cooling and pulverizing with a pulverizer, to thereby obtain [masterbatch 1].

(Comparative Example 1)

[Production of toner of Comparative Example 1]

<Preparation of wax dispersion liquid 1>

A container to which a stirring rod and a thermometer had been set was charged with 400 parts of the [low-molecular-weight polyester 1], 115 parts of synthetic ester wax (mixture) as shown in the following Tables 3-1 and 3-2 (i.e., a mixture of the synthetic ester waxes (1) and (2) at a ratio (1)/(2) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 1].

Through measurement of the [wax dispersion liquid 1] using LA-920 for dispersion diameter, the [wax dispersion liquid 1] was found to have an average particle diameter (wax dispersion particle diameter) of 0.15 μm.

<Preparation of pigment·WAX dispersion liquid 1>

Next, 480 parts of the [masterbatch 1] was added to the above-prepared [wax dispersion liquid 1]. Then, the [wax dispersion liquid 1] was treated with a beads mill (Ultra Visco Mill, product of Aymex Co.) under the following conditions: liquid-feeding rate: 1 kg/hr; disc circumferential speed: 6 m/sec; amount of 0.5 mm-zirconia beads charged: 80% by volume; and pass time: 3, whereby the carbon black and WAX were dispersed. Furthermore, 1,000 parts of 65% ethyl acetate solution of the [low-molecular-weight polyester 1] was added thereto, and the resultant mixture was treated once with the beads mill under the same conditions, to thereby obtain [pigment·WAX dispersion liquid 1].

The concentration of the solid content of the [pigment·WAX dispersion liquid 1] was adjusted by evaporating ethyl acetate, followed by concentrating so as to have a solid content of 53% (measured after drying at 130°C for 30 min.), to thereby obtain [pigment·WAX dispersion liquid 1].

<Production of toner base particles 1>

The following steps of emulsification, desolvation, washing and drying were performed to obtain base particles.

<<Emulsification>>

The [pigment·WAX dispersion liquid 1] (780 parts), 120 parts of the [prepolymer 1] and 5 parts of the [ketimine compound 1] were placed in a container. The resultant mixture was mixed together with a TK homomixer (product of PRIMIX Corporation) at 6,000 rpm for 1 min to prepare an oil phase. Then, 1,300 parts of the [aqueous phase 1] was added to the container, followed by mixing at 13,000 rpm for 20 min with the TK homomixer, to thereby obtain [emulsified slurry 1].

<<Desolvation>>

The [emulsified slurry 1] was added to a container to which a stirrer and a thermometer had been set, followed by desolvating at 30°C for 10 hours and aging at 45°C for 5 hours, to thereby obtain [dispersion slurry 1].

<<Washing and Drying>>

The [dispersion slurry 1] (100 parts) was filtrated under reduced pressure and then subjected twice to a series of treatments (1) to (4) described below, to thereby obtain [filtration cake 1]:

(1): ion-exchanged water (100 parts) was added to the filtration cake, followed by mixing with a TK homomixer (at 12,000 rpm for 10 min) and then filtration;
(2): 10% aqueous sodium hydroxide solution (100 parts) was added to the filtration cake obtained in (1), followed by mixing with a TK homomixer (at 12,000 rpm for 30 min) and then filtration under reduced pressure;
(3): 10% hydrochloric acid (100 parts) was added to the filtration cake obtained in (2), followed by mixing with a TK homomixer (at 12,000 rpm for 10 min) and then filtration; and
(4): ion-exchanged water (300 parts) was added to the filtration cake obtained in (3), followed by mixing with a TK

homomixer (at 12,000 rpm for 10 min) and then filtration.

The [filtration cake 1] was dried with an air-circulating drier at 45°C for 48 hours, and then was caused to pass through a sieve with a mesh size of 75 μm, to thereby prepare [base particles 1].

The [base particles 1] was found to have a volume average particle diameter (Dv) of 5.35 μm and a ratio (Dv/Dn) of volume average particle diameter (Dv) to number average particle diameter (Dn) of 1.08.

Notably, the volume average particle diameter (Dv) and the number average particle diameter (Dn) were measured with MULTISIZER III (product of Beckman Coulter, Inc.).

The above-obtained base particles (100 parts) were mixed with hydrophobic silica (0.7 parts) and hydrophobic titanium oxide (0.3 parts) using HENSCHEL MIXER, to thereby produce a toner containing the base particles (toner of Comparative Example 1).

The following Tables 3-1 and 3-2 collectively shows the combinations and mixing ratios of the synthetic ester waxes, the types of the binder resin used, etc.

Also, the following Table 4 collectively shows the particle diameters of the wax dispersion liquids, the volume average particle diameters of the base particles, and the ratios (Dv/Dn) of volume average particle diameters (Dv) to number average particle diameters (Dn) of the base particles.

(Production of toners of Examples 1 to 2 and Comparative Examples 2 to 7)

The procedure of Comparative Example 1 was repeated, except that, while the total amount of the releasing agent was maintained unchanged, the combinations and mixing ratios of the synthetic ester waxes were changed as described in the following Tables 3-1 and 3-2 to prepare wax dispersion liquids, to thereby produce base particles of Examples 1 to 2 and Comparative Examples 2 to 7.

In the same manner as in Comparative Example 1, the obtained base particles of Examples 1 to 2 and Comparative Examples 2 to 7 were mixed with the fine inorganic particles to produce toners of Examples 1 to 2 and Comparative Examples 2 to 7.

The following Table 4 collectively shows the results obtained through measurement performed in the same manner as in Comparative Example 1: the particle diameters of the wax dispersion liquids; the volume average particle diameters of the base particles; and the ratios (Dv/Dn) of the volume average particle diameters (Dv) to the number average particle diameters (Dn) of the base particles.

(Example 3)

[Production of toner of Example 3]

<Preparation of wax dispersion liquid 5>

A container to which a stirring rod and a thermometer had been set was charged with 400 parts of the [low-molecular-weight polyester 1], 130 parts of synthetic ester wax (mixture) as shown in the following Tables 3-1 and 3-2 (i.e., a mixture of the synthetic ester waxes (1) and (4) at a ratio (1)/(4) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 5].

Through measurement of the [wax dispersion liquid 5] using LA-920 for dispersion diameter, the [wax dispersion liquid 5] was found to have an average particle diameter (wax dispersion particle diameter) of 0.22 μm.

<Preparation of crystalline polyester dispersion liquid 1>

The [crystalline polyester resin 1] (110 g) and ethyl acetate (450 g) were added to a 2 L metal container. The resultant mixture was dissolved or dispersed at 80°C under heating and then quenched in an ice-water bath. Subsequently, glass beads (3 mm in diameter) (500 mL) were added to the mixture, followed by stirring for 10 hours with a batch-type sand mill (product of Kanpe Hapio Co., Ltd.), to thereby obtain [crystalline polyester dispersion liquid 1] having a volume average particle diameter of 0.4 μm.

<Preparation of pigment·WAX dispersion liquid 5>

Next, 480 parts of the [masterbatch 1] and 1,000 parts of the [crystalline polyester dispersion liquid 1] were added to the above-prepared [wax dispersion liquid 5]. Then, the [wax dispersion liquid 5] was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the carbon black, WAX and [crystalline polyester dispersion liquid 1] were dispersed. Furthermore, 1,000 parts of 65% ethyl acetate solution of the [low-molecular-weight polyester 1] was added thereto, and the resultant mixture was treated once with the beads mill under the same conditions, to thereby obtain [pigment·WAX dispersion liquid 5].
The concentration of the solid content of the [pigment·WAX dispersion liquid 5] was adjusted by evaporating ethyl acetate, followed by concentrating so as to have a solid content of 53% (measured after drying at 130°C for 30 min.), to thereby obtain [pigment·WAX dispersion liquid 5].

<Production of toner base particles 5>

The following steps of emulsification, desolvation, washing and drying were performed to obtain base particles.

<<Emulsification>>

The [pigment·WAX dispersion liquid 5] (780 parts), 120 parts of the [prepolymer 1] and 5 parts of the [ketimine compound 1] were placed in a container. The resultant mixture was mixed together with a TK homomixer (product of PRIMIX Corporation) at 6,000 rpm for 1 min. Then, 1,300 parts of the [aqueous phase 1] was added to the container, followed by mixing at 13,000 rpm for 20 min with the TK homomixer, to thereby obtain [emulsified slurry 5].

<<Desolvation>>

The [emulsified slurry 5] was added to a container to which a stirrer and a thermometer had been set, followed by desolvating at 30°C for 10 hours and aging at 45°C for 5 hours, to thereby obtain [dispersion slurry 5].

<<Washing and Drying>>

The [dispersion slurry 5] (100 parts) was filtrated under reduced pressure and then subjected twice to a series of treatments (1) to (4) described below, to thereby obtain [filtration cake 5]:

(1): ion-exchanged water (100 parts) was added to the filtration cake, followed by mixing with a TK homomixer (at 12,000 rpm for 10 min) and then filtration;
(2): 10% aqueous sodium hydroxide solution (100 parts) was added to the filtration cake obtained in (1), followed by mixing with a TK homomixer (at 12,000 rpm for 30 min) and then filtration under reduced pressure;
(3): 10% hydrochloric acid (100 parts) was added to the filtration cake obtained in (2), followed by mixing with a TK homomixer (at 12,000 rpm for 10 min) and then filtration; and
(4): ion-exchanged water (300 parts) was added to the filtration cake obtained in (3), followed by mixing with a TK homomixer (at 12,000 rpm for 10 min) and then filtration.

The [filtration cake 5] was dried with an air-circulating drier at 45°C for 48 hours, and then was caused to pass through a sieve with a mesh size of 75 μm, to thereby prepare [base particles 5].
The [base particles 5] was found to have a volume average particle diameter (Dv) of 5.20 μm and a ratio (Dv/Dn) of volume average particle diameter (Dv) to number average particle diameter (Dn) of 1.10.
The above-obtained base particles (100 parts) were mixed with hydrophobic silica (0.7 parts) and hydrophobic titanium oxide (0.3 parts) using HENSCHEL MIXER, to thereby produce a toner containing the base particles (toner of Example 3).
Notably, the dispersion diameter of the releasing agent in the base particles was found to be 0.12 μm. The dispersion particle diameter of the crystalline polyester in the base particles was found to be 0.2 μm to 3.0 μm in terms of major axis diameter.
The following Table 4 collectively shows the particle diameters of the wax dispersion liquids, the volume average particle diameters of the base particles, and the ratios (Dv/Dn) of volume average particle diameters (Dv) to number average particle diameters (Dn) of the base particles.

(Example 4)

<Preparation of crystalline polyester dispersion liquid 2>

The [crystalline polyester resin 2] (110 g) and ethyl acetate (450 g) were added to a 2 L metal container. The resultant mixture was dissolved or dispersed at 80°C under heating and then quenched in an ice-water bath. Subsequently, glass beads (3 mm in diameter) (500 mL) were added to the mixture, followed by stirring for 10 hours with a batch-type sand mill (product of Kanpe Hapio Co., Ltd.), to thereby obtain [crystalline polyester dispersion liquid 2] having a volume average particle diameter of 0.45 μm.

[Production of toner of Example 4]

The procedure of Example 3 was repeated, except that, while the total amount of the releasing agent was maintained unchanged, the combination and mixing ratio of the synthetic ester wax was changed as described in the following Tables 3-1 and 3-2 to prepare a wax dispersion liquid and that the [crystalline polyester dispersion liquid 1] was changed to the [crystalline polyester dispersion liquid 2], to thereby produce base particles of Example 3.

Through measurement of the wax dispersion liquid using LA-920 for dispersion diameter, the wax dispersion liquid was found to have an average particle diameter (wax dispersion particle diameter) of 0.14 μm.

The obtained toner base particles were found to have a volume average particle diameter (Dv) of 5.10 μm and a ratio (Dv/Dn) of volume average particle diameter (Dv) to number average particle diameter (Dn) of 1.12.

The obtained base particles were mixed with the fine inorganic particles in the same manner as in Example 3, to thereby produce a toner of Example 4.

Notably, the dispersion diameter of the releasing agent in the base particles was found to be 0.10 μm. The dispersion particle diameter of the crystalline polyester in the base particles was found to be 0.2 μm to 3.0 μm in terms of major axis diameter.

The following Table 4 collectively shows the particle diameter of the wax dispersion liquid, the volume average particle diameter of the base particle, and the ratio (Dv/Dn) of volume average particle diameter (Dv) to number average particle diameter (Dn) of the base particles.

(Comparative Example 8)

[Production of toner of Comparative Example 8]

<Preparation of wax dispersion liquid 7>

A container to which a stirring rod and a thermometer had been set was charged with 200 parts of the [low-molecular-weight polyester 1], 400 parts of synthetic ester wax (mixture) as shown in the following Tables 3-1 and 3-2 (i.e., a mixture of the synthetic ester waxes (1) and (2) at a ratio (1)/(2) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 7].

Through measurement of the [wax dispersion liquid 7] using LA-920 for dispersion diameter, the [wax dispersion liquid 7] was found to have an average particle diameter (wax dispersion particle diameter) of 0.19 μm.

<Preparation of pigment·WAX dispersion liquid 7>

Next, 480 parts of the [masterbatch 1] was added to the above-prepared [wax dispersion liquid 7]. Then, the [wax dispersion liquid 7] was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the carbon black and WAX were dispersed. Furthermore, 846 parts of 65% ethyl acetate solution of the [low-molecular-weight polyester 1] was added thereto, and the resultant mixture was treated once with the beads mill under the same conditions, to thereby obtain [pigment·WAX dispersion liquid 7].

The concentration of the solid content of the [pigment·WAX dispersion liquid 7] was adjusted by evaporating ethyl acetate, followed by concentrating so as to have a solid content of 53% (measured after drying at 130°C for 30 min.), to thereby obtain [pigment·WAX dispersion liquid 7].

<Production of toner base particles 7>

The following steps of emulsification, desolvation, washing and drying were performed to obtain base particles.

<<Emulsification>>

The [pigment·WAX dispersion liquid 7] (780 parts), 120 parts of the [prepolymer 1] and 5 parts of the [ketimine compound 1] were placed in a container. The resultant mixture was mixed together with a TK homomixer (product of PRIMIX Corporation) at 6,000 rpm for 1 min. Then, 1,300 parts of the [aqueous phase 1] was added to the container, followed by mixing at 13,000 rpm for 20 min with the TK homomixer, to thereby obtain [emulsified slurry 7].

<<Desolvation>>

The [emulsified slurry 7] was added to a container to which a stirrer and a thermometer had been set, followed by desolvating at 30°C for 10 hours and aging at 45°C for 5 hours, to thereby obtain [dispersion slurry 7].

<<Washing and Drying>>

The [dispersion slurry 7] (100 parts) was filtrated under reduced pressure and then subjected twice to a series of treatments (1) to (4) described below, to thereby obtain [filtration cake 7]:

(1): ion-exchanged water (100 parts) was added to the filtration cake, followed by mixing with a TK homomixer (at 12,000 rpm for 10 min) and then filtration;
(2): 10% aqueous sodium hydroxide solution (100 parts) was added to the filtration cake obtained in (1), followed by mixing with a TK homomixer (at 12,000 rpm for 30 min) and then filtration under reduced pressure;
(3): 10% hydrochloric acid (100 parts) was added to the filtration cake obtained in (2), followed by mixing with a TK homomixer (at 12,000 rpm for 10 min) and then filtration; and
(4): ion-exchanged water (300 parts) was added to the filtration cake obtained in (3), followed by mixing with a TK homomixer (at 12,000 rpm for 10 min) and then filtration.

The [filtration cake 7] was dried with an air-circulating drier at 45°C for 48 hours, and then was caused to pass through a sieve with a mesh size of 75 μm, to thereby prepare [base particles].

The base particles were found to have a volume average particle diameter (Dv) of 5.01 μm and a ratio (Dv/Dn) of volume average particle diameter (Dv) to number average particle diameter (Dn) of 1.14.

The above-obtained base particles (100 parts) were mixed with hydrophobic silica (0.7 parts) and hydrophobic titanium oxide (0.3 parts) using HENSCHEL MIXER, to thereby produce a toner (toner of Comparative Example 8).

Also, the following Table 4 collectively shows the particle diameters of the wax dispersion liquid, the volume average particle diameter of the base particles, and the ratio (Dv/Dn) of volume average particle diameter (Dv) to number average particle diameter (Dn) of the base particles.

(Example 5)

[Production of toner of Example 5]

The procedure of Comparative Example 1 was repeated, except that, while the total amount of the releasing agent was maintained unchanged, the combination and mixing ratio of the synthetic ester waxes were changed as described in the following Tables 3-1 and 3-2 to prepare a wax dispersion liquid, to thereby produce base particles of Example 5.

The above-obtained base particles of Example 5 (100 parts) were mixed with hydrophobic silica (0.7 parts) and hydrophobic titanium oxide (0.3 parts) using HENSCHEL MIXER, to thereby produce a toner (toner of Example 5).

The following Table 4 collectively shows the particle diameter of the wax dispersion liquid, the volume average particle diameter of the base particles, and the ratio (Dv/Dn) of volume average particle diameters (Dv) to number average particle diameters (Dn) of the base particles.

(Comparative Example 9)

[Production of toner of Comparative Example 9]

<Preparation of wax dispersion liquid 9>

A container to which a stirring rod and a thermometer had been set was charged with 400 parts of the [low-molecular-weight polyester 1], 10 parts of synthetic ester wax (mixture) as shown in the following Tables 3-1 and 3-2 (i.e., a mixture of the synthetic ester waxes (1) and (2) at a ratio (1)/(2) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 9].

Through measurement of the [wax dispersion liquid 9] using LA-920 for dispersion diameter, the [wax dispersion liquid 9] was found to have an average particle diameter (wax dispersion particle diameter) of 0.13 μm.

<Preparation of toner base particles 9>

The procedure of Comparative Example 8 was repeated, except that the [wax dispersion liquid 7] was changed to the [wax dispersion liquid 9], to thereby prepare base particles.

The obtained base particles were found to have a volume average particle diameter (Dv) of 5.25 μm and a ratio (Dv/Dn) of volume average particle diameter (Dv) to number average particle diameter (Dn) of 1.15.

The above-obtained base particles (100 parts) were mixed with hydrophobic silica (0.7 parts) and hydrophobic titanium oxide (0.3 parts) using HENSCHEL MIXER, to thereby produce a toner (toner of Comparative Example 9).

The following Table 4 collectively shows the results obtained through measurement performed in the same manner as in Comparative Example 1: the particle diameter of the wax dispersion liquid; the volume average particle diameter of the base particles; and the ratio (Dv/Dn) of volume average particle diameter (Dv) to number average particle diameter (Dn) of the base particles.

(Comparative Example 10)

[Production of toner of Comparative Example 10]

<Preparation of wax dispersion liquid 10>

A container to which a stirring rod and a thermometer had been set was charged with 200 parts of the [low-molecular-weight polyester 1], 300 parts of synthetic ester wax (mixture) as shown in the following Tables 3-1 and 3-2 (i.e., a mixture of the synthetic ester waxes (1) and (2) at a ratio (1)/(2) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 10].

Through measurement of the [wax dispersion liquid 10] using LA-920 for dispersion diameter, the [wax dispersion liquid 10] was found to have an average particle diameter (wax dispersion particle diameter) of 0.16 μm.

<Preparation of toner base particles 10>

The procedure of Comparative Example 8 was repeated, except that the [wax dispersion liquid 7] was changed to the [wax dispersion liquid 10], to thereby prepare base particles.

The obtained base particles were found to have a volume average particle diameter (Dv) of 5.18 μm and a ratio (Dv/Dn) of volume average particle diameter (Dv) to number average particle diameter (Dn) of 1.14.

The above-obtained base particles (100 parts) were mixed with hydrophobic silica (0.7 parts) and hydrophobic titanium oxide (0.3 parts) using HENSCHEL MIXER, to thereby produce a toner (toner of Comparative Example 10).

The following Table 4 collectively shows the results obtained through measurement performed in the same manner as in Comparative Example 1: the particle diameter of the wax dispersion liquid; the volume average particle diameter of the base particles; and the ratio (Dv/Dn) of volume average particle diameter (Dv) to number average particle

diameter (Dn) of the base particles.

(Comparative Example 11)

[Production of toner of Comparative Example 11]

<Preparation of wax dispersion liquid 11>

A container to which a stirring rod and a thermometer had been set was charged with 400 parts of the [low-molecular-weight polyester 1], 35 parts of synthetic ester wax (mixture) as shown in the following Tables 3-1 and 3-2 (i.e., a mixture of the synthetic ester waxes (1) and (2) at a ratio (1)/(2) by mass of 50/50) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 11].

Through measurement of the [wax dispersion liquid 11] using LA-920 for dispersion diameter, the [wax dispersion liquid 11] was found to have an average particle diameter (wax dispersion particle diameter) of 0.18 μm.

<Preparation of toner base particles 11>

The procedure of Comparative Example 8 was repeated, except that the [wax dispersion liquid 7] was changed to the [wax dispersion liquid 11], to thereby prepare base particles.

The obtained base particles were found to have a volume average particle diameter (Dv) of 5.22 μm and a ratio (Dv/Dn) of volume average particle diameter (Dv) to number average particle diameter (Dn) of 1.13.

The above-obtained base particles (100 parts) were mixed with hydrophobic silica (0.7 parts) and hydrophobic titanium oxide (0.3 parts) using HENSCHEL MIXER, to thereby produce a toner (toner of Comparative Example 11).

The following Table 4 collectively shows the results obtained through measurement performed in the same manner as in Comparative Example 1: the particle diameter of the wax dispersion liquid; the volume average particle diameter of the base particles; and the ratio (Dv/Dn) of volume average particle diameter (Dv) to number average particle diameter (Dn) of the base particles.

(Comparative Example 12 and Comparative Example 13)

The procedure of Comparative Example 1 was repeated, except that, while the total amount of the releasing agent was maintained unchanged, the combination of the synthetic ester waxes was changed as described in the following Tables 3-1 and 3-2 to prepare a wax dispersion liquid, to thereby produce base particles.

The following Table 4 collectively shows the results obtained through measurement performed in the same manner as in Comparative Example 1: the particle diameter and the particle size distribution of the toner base particles.

The obtained base particles are mixed with fine inorganic particles in the same manner as in Comparative Example 1, to thereby a toner.

(Comparative Example 14)

The procedure of Comparative Example 1 was repeated, except that the [low-molecular-weight polyester 1] was changed to the [low-molecular-weight polyester 2], to thereby produce a toner.

(Comparative Example 15)

The procedure of Comparative Example 1 was repeated, except that the [low-molecular-weight polyester 1], [prepolymer 1] and [ketimine compound 1] were changed to the [styrene acryl resin 1], to thereby produce a toner.

(Comparative Example 16)

<Preparation of wax dispersion liquid 14>

A container to which a stirring rod and a thermometer had been set was charged with 400 parts of the [low-molecular-weight polyester 1], 115 parts of synthetic ester wax (mixture) as shown in the following Tables 3-1 and 3-2

(i.e., a mixture of the synthetic ester waxes (1), (2), (3), (4) and (5) at a ratio (1)/(2)/(3)/(4)/(5) by mass of 50/13/13/13/11) and 1,000 parts of ethyl acetate. Then, the resultant mixture was increased in temperature to 80°C under stirring, maintained at 80°C for 8 hours, and cooled to 24°C for 1 hour. The obtained dispersion liquid was treated with a beads mill (Ultra Visco Mill, product of Aymex Co.) under the following conditions: liquid-feeding rate: 1 kg/hr; disc circumferential speed: 6 m/sec; amount of 0.5 mm (in diameter)-zirconia beads charged: 80% by volume; and pass time: 3, whereby the synthetic ester wax (WAX) was dispersed to obtain [wax dispersion liquid 14].

Through measurement of the [wax dispersion liquid 14] using LA-920 for dispersion diameter, the [wax dispersion liquid 14] was found to have an average particle diameter (wax dispersion particle diameter) of 0.22 μm.

<Preparation of toner base particles 14>

The procedure of Comparative Example 1 was repeated, except that the [wax dispersion liquid 1] was changed to the [wax dispersion liquid 14], to thereby prepare base particles.

The obtained base particles were found to have a volume average particle diameter (Dv) of 5.05 μm and a ratio (Dv/Dn) of volume average particle diameter (Dv) to number average particle diameter (Dn) of 1.10.

The above-obtained base particles (100 parts) were mixed with hydrophobic silica (0.7 parts) and hydrophobic titanium oxide (0.3 parts) using HENSCHEL MIXER, to thereby produce a toner (toner of Comparative Example 16).

The following Table 4 collectively shows the results obtained through measurement performed in the same manner as in Comparative Example 1: the particle diameter of the wax dispersion liquid; the volume average particle diameter of the base particles; and the ratio (Dv/Dn) of volume average particle diameter (Dv) to number average particle diameter (Dn) of the base particles.

Tables 3-1 and 3-2 show the amounts and types of the materials used in Examples 1 to 5 and Comparative Examples 1 to 16: the combination and mixing ratio of waxes; the amount (% by mass) of the component (N1) contained in the synthetic ester wax in the largest amount and the number of carbon atoms thereof; the amount (% by mass) of the component (N2) contained in the synthetic ester wax in the second largest amount or the same amount as the amount of the component (N1) and the number of carbon atoms thereof; the amount (% by mass) of the releasing agent with respect to the total amount of the base particles; the presence or absence of the crystalline polyester and the amount (% by mass) of the crystalline polyester with respect to the releasing agent; and the type of the resin used. Notably, the unit "% by mass" in the component N1 or N2 is "% by mass" with respect to the releasing agent in the toner.

Table 4 shows the dispersion particle diameters of the wax dispersion liquids, the volume average particle diameters (Dv) of the toners, and the ratios Dv/Dn (where Dn denotes a number average particle diameter) in Examples 1 to 5 and Comparative Examples 1 to 16.

Table 3-1

| | Synthetic ester wax | | N1 component | | N2 component | |
|---|---|---|---|---|---|---|
| | Combination of wax | Mixing ratio (% by mass) | Amount (% by mass) | Number of carbon atoms | Amount (% by mass) | Number of carbon atoms |
| Comp. Ex. 1 | 1/2 | 50/50 | 48 | 36 | 45 | 38 |
| Ex. 1 | 1/3 | 50/50 | 45 | 36 | 44 | 40 |
| Comp. Ex. 2 | 1/2/3 | 33/33/33 | 32 | 36 | 32 | 38 |
| Ex. 2 | 1/4 | 50/50 | 45 | 36 | 44 | 42 |
| Comp. Ex. 3 | 1/2 | 60/40 | 57 | 36 | 36 | 38 |
| Comp. Ex. 4 | 1 | 100 | 90 | 36 | 3.9 | 34 |
| Comp. Ex. 5 | 1/2/3/4 | 25/25/25/25 | 25 | 38 | 24 | 36 |
| Comp. Ex. 6 | 1/4 | 60/40 | 54 | 36 | 36 | 42 |
| Comp. Ex. 7 | 4 | 100 | 89 | 42 | 6.8 | 40 |

(continued)

| | Synthetic ester wax | | N1 component | | N2 component | |
|---|---|---|---|---|---|---|
| | Combination of wax | Mixing ratio (% by mass) | Amount (% by mass) | Number of carbon atoms | Amount (% by mass) | Number of carbon atoms |
| Ex. 3 | 1/4 | 50/50 | 45 | 36 | 44 | 42 |
| Ex. 4 | 2/4 | 50/50 | 45 | 38 | 44 | 42 |
| Comp. Ex. 8 | 1/2 | 50/50 | 48 | 36 | 45 | 38 |
| Ex. 5 | 4/5 | 50/50 | 44 | 42 | 44 | 34 |
| Comp. Ex. 9 | 1/2 | 50/50 | 48 | 36 | 45 | 38 |
| Comp. Ex. 10 | 1/2 | 50/50 | 48 | 36 | 45 | 38 |
| Comp. Ex. 11 | 1/2 | 50/50 | 48 | 36 | 45 | 38 |
| Comp. Ex. 12 | 7/6 | 50/50 | 44 | 40 | 42 | 28 |
| Comp. Ex. 13 | 7/4 | 50/50 | 44 | 42 | 42 | 28 |
| Comp. Ex. 14 | 1/2 | 50/50 | 48 | 36 | 45 | 38 |
| Comp. Ex. 15 | 1/2 | 50/50 | 48 | 36 | 45 | 38 |
| Comp. Ex. 16 | 1/2/3/4/5 | 50/13/13 /13/11 | 46 | 36 | 13 | 38 |

Table 3-2

| | Amount of releasing agent to the total amount of base particles (% by mass) | Crystalline polyester | | Amount of unmodified polyester used (low-molecular-weight polyester) | Prepolymer/ Ketimine compound |
|---|---|---|---|---|---|
| | | Type | Amount of crystalline polyester used (vs. the total amount of releasing agent (% by mass)) | | |
| Comp. Ex. 1 | 6 | - | - | 1 | Prepolymer 11 Ketimine compound 1 |
| Ex. 1 | 6 | - | - | 1 | Prepolymer 1/ Ketimine compound 1 |
| Comp. Ex. 2 | 6 | - | - | 1 | Prepolymer 1/ Ketimine compound 1 |
| Ex. 2 | 6 | - | - | 1 | Prepolymer 1/ Ketimine compound 1 |

(continued)

| | Amount of releasing agent to the total amount of base particles (% by mass) | Crystalline polyester | | Amount of unmodified polyester used (low-molecular-weight polyester) | Prepolymer/ Ketimine compound |
|---|---|---|---|---|---|
| | | Type | Amount of crystalline polyester used (vs. the total amount of releasing agent (% by mass)) | | |
| Comp. Ex. 3 | 6 | - | - | 1 | Prepolymer 1/ Ketimine compound 1 |
| Comp. Ex. 4 | 6 | - | - | 1 | Prepolymer 1/ Ketimine compound 1 |
| Comp. Ex. 5 | 6 | - | - | 1 | Prepolymer 1/ Ketimine compound 1 |
| Comp. E x. 6 | 6 | - | - | 1 | Prepolymer 1/ Ketimine compound 1 |
| Comp. Ex. 7 | 6 | - | - | 1 | Prepolymer 1/ Ketimine compound 1 |
| Ex. 3 | 6 | 1 | 200 | 1 | Prepolymer 1/ Ketimine compound 1 |
| Ex. 4 | 6 | 2 | 200 | 1 | Prepolymer 1/ Ketimine compound 1 |
| Comp. Ex. 8 | 21 | - | - | 1 | Prepolymer 1/ Ketimine compound 1 |
| Ex. 5 | 6 | - | - | 1 | Prepolymer 1/ Ketimine compound 1 |
| Comp. Ex. 9 | 0.5 | - | - | 1 | Prepolymer 1/ Ketimine compound 1 |
| Comp. Ex. 10 | 17 | - | - | 1 | Prepolymer 1/ Ketimine compound 1 |
| Comp. Ex. 11 | 2 | - | - | 1 | Prepolymer 1/ Ketimine compound 1 |
| Comp. Ex. 12 | 6 | - | - | 1 | Prepolymer 1/ Ketimine compound 1 |
| Comp. Ex. 13 | 6 | - | - | 1 | Prepolymer 1/ Ketimine compound 1 |

(continued)

| | Amount of releasing agent to the total amount of base particles (% by mass) | Crystalline polyester | | Amount of unmodified polyester used (low-molecular-weight polyester) | Prepolymer/ Ketimine compound |
|---|---|---|---|---|---|
| | | Type | Amount of crystalline polyester used (vs. the total amount of releasing agent (% by mass)) | | |
| Comp. Ex. 14 | 6 | - | - | 2 | Prepolymer 1/ Ketimine compound 1 |
| Comp. Ex. 15 | 6 | - | - | - | - |
| Comp. Ex. 16 | 6 | - | - | 1 | Prepolymer 1/ Ketimine compound 1 |

Table 4

| Examples Comparative Examples | Particle diameter of wax dispersion liquid (μm) | Volume average particle diameter of base particles Dv (μm) | Dv/Dn |
|---|---|---|---|
| Comp. Ex. 1 | 0.15 | 5.35 | 1.08 |
| Ex. 1 | 0.23 | 5.35 | 1.10 |
| Comp. Ex. 2 | 0.22 | 5.21 | 1.08 |
| Ex. 2 | 0.18 | 5.05 | 1.09 |
| Comp. Ex. 3 | 0.28 | 5.16 | 1.13 |
| Comp. Ex. 4 | 0.23 | 5.08 | 1.10 |
| Comp. Ex. 5 | 0.22 | 5.32 | 1.12 |
| Comp. Ex. 6 | 0.19 | 5.02 | 1.11 |
| Comp. Ex. 7 | 0.30 | 5.21 | 1.14 |
| Ex. 3 | 0.22 | 5.20 | 1.10 |
| Ex. 4 | 0.14 | 5.10 | 1.12 |
| Comp. Ex. 8 | 0.19 | 5.01 | 1.14 |
| Ex. 5 | 0.15 | 5.15 | 1.14 |
| Comp. Ex. 9 | 0.13 | 5.25 | 1.15 |
| Comp. Ex. 10 | 0.16 | 5.18 | 1.14 |
| Comp. Ex. 11 | 0.18 | 5.22 | 1.13 |
| Comp. Ex. 12 | 0.21 | 5.28 | 1.16 |
| Comp. Ex. 13 | 0.18 | 5.08 | 1.11 |
| Comp. Ex. 14 | 0.15 | 5.30 | 1.10 |
| Comp. Ex. 15 | 0.15 | 5.26 | 1.19 |
| Comp. Ex. 16 | 0.22 | 5.05 | 1.10 |

Each of the toners produced in Examples 1 to 5 and Comparative Examples 1 to 16 was used to produce a two-component developer, and the produced two-component developer was evaluated. The carrier used in the two-component developer was produced with the following method.

[Production of carrier]

Next will be described a specific production example of the carrier used for evaluating the toner in an actual apparatus. However, carriers usable in the present invention are not limited to thereto.

<Composition of carrier>

Acryl resin solution (HITALOID3001, product of Hitachi Chemical Co., Ltd., solid content: 50%): 21.0 parts
Guanamine solution (MYCOAT106, product of Mitsui Scitech, solid content: 70%): 6.4 parts
Alumina particles [particle diameter: 0.3 μm, specific resistance: $10^{14}$ (Ω-cm)]: 7.6 parts
Silicone resin solution [solid content: 23% (SR2410, product of Dow Corning Toray Silicone Co., Ltd.)]: 65.0 parts
Amino silane [solid content: 100% (SH6020, product of Dow Corning Toray Silicone Co., Ltd.)]: 1.0 part
Toluene: 60 parts
Butylcellosolve: 60 parts

The carrier materials were dispersed at the above proportion with a homomixer for 10 min, to thereby prepare a solution for forming a coating film of a silicone resin and an acryl resin containing alumina particles. The above-prepared coating film-forming solution was applied on fired ferrite powder [$(MgO)_{1.8}(MnO)_{49.5}(Fe_2O_3)_{48.0}$, average particle diameter: 25 μm] serving as cores so as to have an average thickness of 0.15 um using a Spira coater (product of Okada Seiko Co.), followed by drying, to thereby obtain coated ferrite powder. The obtained coated ferrite powder was fired in an electric furnace at 150°C for 1 hour. After cooling, the bulk of the ferrite powder was treated with a sieve having a mesh size of 106 μm, to thereby prepare carrier particles. Since the coated films covering the carrier surfaces could be observed by observing the cross-sections of the carrier particles under a transmission electron microscope, the average thickness of the coated films was measured through this observation. In this manner, carrier A having a weight average particle diameter of 35 μm was obtained.

[Production of two-component developer]

The carrier A (100 parts) and each (7 parts) of the toners of Examples 1 to 5 and Comparative Examples 1 to 16 were homogeneously mixed together and charged in a turblar mixer whose container is rotated for stirring, to thereby produce a two-component developer.

[Evaluation of toner]

Each of the produced two-component developers was evaluated in the following manner. The evaluation results are shown in the following Table 5.

<Evaluation conditions>

There was provided an apparatus obtained by modifying IMAGIO MP C6000 (product of Ricoh Company Ltd.) so that the fixing portion thereof could be independently driven and controlled in temperature. Separately, there were provided plane paper sheets each having an unfixed image formed at a toner adhesion amount of 0.6 mg/$cm^2$. Then, while gradually increasing the temperature of the fixing belt to be in contact with a medium such as paper, the plane paper sheets were caused to pass through the apparatus whereby the toner was fixed on the paper sheets.

[Minimum fixing temperature]

The minimum fixing temperature was defined as a minimum temperature at which the following phenomenon did not occur: the fixed image was not sufficiently attached onto the paper sheet, and the unfixed toner was conveyed with the belt and attached onto a paper sheet at the second cycle to form an abnormal image (no cold offset-occurring temperature).

[Maximum fixing temperature]

The maximum fixing temperature was defined as a maximum temperature at which the following phenomenon did not occur: the fixed image was excessively melted on the paper sheet, and the melted toner was conveyed with the

belt and attached onto a paper sheet at the second cycle to form an abnormal image (no hot offset-occurring temperature).

[Fixing temperature range]

The fixing temperature range was defined as the difference between the maximum fixing temperature and the minimum fixing temperature.
Note that the difference between the maximum and minimum fixing temperatures is preferably 40°C or higher.

[Change in glossiness with change in temperature]

If the releasing agent effectively functions, the glossiness of the image increases with increasing of the fixing temperature. When the difference between the image glossiness at a high fixing temperature and that at a low fixing temperature is small, it is suggested that the releasing agent does not sufficiently function at high fixing temperatures whereby the toner becomes difficult to release from the fixing belt (i.e., poor releaseability). Thus, the difference between image glossiness at the maximum fixing temperature - 20°C and that at the maximum fixing temperature is indicative of whether the releasing agent effectively functions at high temperatures.
Then, after measuring the glossiness (A) of an image fixed at [Maximum fixing temperature - 20°C] and the glossiness (B) of an image fixed at [Maximum fixing temperature], the difference (B - A) therebetween was evaluated.
The difference (B - A) in glossiness is preferably 20 or more.

[Measurement of glossiness]

In the evaluation of a change in glossiness, the glossiness was measured with a gloss meter (product of NIPPON DENSHOKU INDUSTRIES CO., LTD.) at an incident angle of 60°. Note that the transfer paper sheet used was of Type 6000-70W (product of Ricoh Company Ltd.). The higher the measured glossiness, the higher the glossiness of the image. The glossiness is preferably higher to obtain a clear image having high color reproducibility.

[Transfer efficiency (%)]

Using an evaluating machine which had been obtained by tuning IMAGIO MP C6000 (product of Ricoh Company Ltd.) so that the linear velocity and the transfer time thereof were adjustable, each developer was subjected to a running test in which A4 solid images having a toner adhesion amount of 0.6 mg/cm$^2$ were printed out as test images. After printing of 10,000 or 100,000 test images, the transfer efficiency at the secondary transfer was calculated using the following equation (1). Note that the evaluation criteria are as follows.

$$\text{Secondary transfer efficiency (\%)} = ((\text{amount of toner transferred onto intermediate transfer medium} - \text{amount of toner remaining on intermediate transfer medium after secondary transfer})/\text{amount of toner transferred onto intermediate transfer medium}) \times 100 \cdots (1)$$

The evaluation criteria are as follows.

A: 90% ≤ Secondary transfer efficiency
B: 85% ≤ Secondary transfer efficiency < 90%
C: 80% ≤ Secondary transfer efficiency < 85%
D: Secondary transfer efficiency < 80%

[Contamination in apparatus]

After printing of 100,000 test images with IMAGIO MP C6000 (product of Ricoh Company Ltd.), the amount of volatile components attached onto a cover above the fixing belt member was visually determined. In the course of further

running, the volatile components are melted to fall during operation of the apparatus to contaminate the images.

The evaluation criteria are as follows.

A: Almost no attachment of contaminants was observed.
B: Contaminants were attached to such an extent that they could be managed to be observed with the naked eyes.
C: Clear attachment of contaminants could be observed; contaminants were attached at such a level that they were immediately deposited to contaminate the images.
D: Contaminants were attached at such a level that they were melted and fall to contaminate the images.

Table 5

| | Min. fixing temp. (°C) | Max. fixing temp. (°C) | Fixing temp. range | Change in glossiness | Secondary transfer efficiency | | Contamination of releasing agent in apparatus |
|---|---|---|---|---|---|---|---|
| | | | | | Running 10,000 sheets | Running 100,000 sheets | Running 100,000 sheets |
| Comp. Ex. 1 | 120 | 170 | 50 | 25 | A | B | B |
| Ex. 1 | 120 | 180 | 60 | 30 | A | A | A |
| Comp. Ex. 2 | 130 | 170 | 40 | 22 | A | B | B |
| Ex. 2 | 115 | 185 | 70 | 35 | A | A | A |
| Comp. Ex. 3 | 130 | 160 | 30 | 15 | C | C | C |
| Comp. Ex. 4 | 135 | 155 | 20 | 0 | C | D | D |
| Comp. Ex. 5 | 135 | 160 | 25 | 5 | B | C | D |
| Comp. Ex. 6 | 125 | 165 | 40 | 15 | C | D | C |
| Comp. Ex. 7 | 135 | 160 | 25 | 0 | C | D | D |
| Ex. 3 | 110 | 175 | 65 | 40 | A | A | A |
| Ex. 4 | 105 | 180 | 75 | 45 | A | A | A |
| Comp. Ex. 8 | 120 | 185 | 65 | 35 | B | C | B |
| Ex. 5 | 120 | 195 | 75 | 40 | A | A | A |
| Comp. Ex. 9 | 125 | 155 | 30 | 25 | A | A | A |
| Comp. Ex. 10 | 125 | 180 | 55 | 35 | A | B | A |
| Comp. Ex. 11 | 125 | 165 | 40 | 30 | A | B | A |
| Comp Ex. 12 | 120 | 170 | 50 | 25 | B | B | B |
| Comp. Ex. 13 | 130 | 150 | 20 | 10 | B | D | D |

(continued)

| | Min. fixing temp. (°C) | Max. fixing temp. (°C) | Fixing temp. range | Change in glossiness | Secondary transfer efficiency | | Contamination of releasing agent in apparatus |
|---|---|---|---|---|---|---|---|
| | | | | | Running 10,000 sheets | Running 100,000 sheets | Running 100,000 sheets |
| Comp. Ex. 14 | 125 | 200 | 75 | 45 | A | A | A |
| Comp. Ex. 15 | 155 | 165 | 10 | 0 | D | D | C |
| Comp. Ex. 16 | 120 | 160 | 40 | 20 | B | B | B |

From the evaluation results shown above, it could be confirmed that the toner of the present invention had a low fixing temperature leading to energy saving, had a wide fixing temperature range, and had resistance to a change in fixing temperature of the apparatus. In addition, it could also be confirmed that the toner of the present invention involved no contamination against charging members such as a carrier and a charging blade not to degrade transferability over time, showed good printing quality in the initial state, and stably attaining high image quality during continuous printing. Furthermore, contamination in the apparatus due to the releasing agent was less observed.

That is, the present invention can provide an image-forming toner, developer, developer-housing container (toner container) and image forming method, which are for visualizing a latent electrostatic image on an image bearing member in, for example, an electrophotographic apparatus and an electrophotographic recording apparatus. These suppress contamination against the images and in the apparatus even in continuous use, realizing high-quality image formation.

Reference Signs List

1: Image bearing member
2: Charging member
3: Developing device
4: Toner
5: Developing sleeve
6: Transfer conveyance belt
6a: Bias roller
7: Cleaning blade
8: Recovering spring
9: Recovering coil
10: Image bearing member and cleaning unit (PCU)
13: Conveying screw
14: Paddle (stirring mechanism)
16: Reflection concentration detection sensor (P sensor)
17: Toner concentration sensor
18: Registration roller
20: Charge-eliminating device
S: Transfer paper sheet
r: Image light

## Claims

**1.** A toner comprising:

a polyester as a binder resin, and
a releasing agent,
wherein the releasing agent comprises a first C30-C50 alkyl monoester compound and a second C30-C50 alkyl monoester compound,
wherein the number of carbon atoms of the first C30-C50 alkyl monoester compound is different from the number of carbon atoms of the second C30-C50 alkyl monoester compound,
wherein the amount of the first C30-C50 alkyl monoester compound is the largest in the releasing agent and the amount of the second C30-C50 alkyl monoester compound is the second largest in the releasing agent or the same as the amount of the first C30-C50 alkyl monoester compound,
wherein the amount of the first C30-C50 alkyl monoester compound is 30% by mass or more but less than 50% by mass with respect to the releasing agent,
wherein the amount of the second C30-C50 alkyl monoester compound is 10% by mass or more but less than 50% by mass with respect to the releasing agent, and
wherein the difference between the number of the carbon atoms of the first C30-C50 alkyl monoester compound and the number of the carbon atoms of the second C30-C50 alkyl monoester compound is 4 to 8 as an absolute value.

**2.** The toner according to claim 1, wherein the total amount of the first C30-C50 alkyl monoester compound and the second C30-C50 alkyl monoester compound is 90% by mass or more with respect to the releasing agent.

**3.** The toner according to claim 1 or 2, wherein the releasing agent further comprises a third C30-C50 alkyl monoester compound the amount of which is the third largest in the releasing agent or the same as the amount of the second C30-C50 alkyl monoester compound, and wherein the total amount of the first C30-C50 alkyl monoester compound, the second C30-C50 alkyl monoester compound and the third C30-C50 alkyl monoester compound is 95% by mass or more with respect to the releasing agent.

**4.** The toner according to any one of claims 1 to 3, comprising base particles each containing the binder resin and the releasing agent, wherein the base particles have a volume average particle diameter (Dv) which is 3.0 μm or more but less than 6.0 μm.

**5.** The toner according to any one of claims 1 to 4, wherein the amount of the releasing agent is 1% by mass to 20% by mass with respect to the base particles.

**6.** The toner according to any one of claims 1 to 5, wherein the binder resin contains a modified polyester.

**7.** The toner according to any one of claims 1 to 6, wherein the binder resin contains a crystalline polyester.

**8.** A method for producing the toner according to any one of claims 1 to 7, comprising:

dissolving or dispersing, in an organic solvent, a releasing agent and at least one of a polyester binder resin and a polyester binder resin precursor containing an ester bond, to thereby prepare a toner material liquid,
emulsifying or dispersing the toner material liquid in an aqueous medium to prepare an emulsion or dispersion liquid, and
removing the organic solvent from the emulsion or dispersion liquid to form base particles.

**9.** An image forming method comprising:

charging a surface of an image bearing member,
exposing the charged surface of the image bearing member to light to form a latent electrostatic image on the image bearing member,
developing the latent electrostatic image formed on the image bearing member with a developer containing a toner to form a toner image on the image bearing member,
transferring the toner image onto a recording medium, and
fixing the transferred toner image on the recording medium,
wherein the toner is the toner according to any one of claims 1 to 7.

## Patentansprüche

1. Toner, umfassend

einen Polyester als ein Bindemittelharz und
ein Trennmittel,
wobei das Trennmittel eine erste C30-C50-Alkylmonoesterverbindung und eine zweite C30-C50-Alkylmonoesterverbindung umfasst,
wobei die Anzahl an Kohlenstoffatomen des ersten C30-C50-Alkylmonoesterverbindung sich von der Anzahl an Kohlenstoffatomen der zweiten C30-C50-Alkylmonoesterverbindung unterscheidet,
wobei die Menge der ersten C30-C50-Alkylmonoesterverbindung die größte im Trennmittel ist und die Menge der zweiten C30-C50-Alkylmonoesterverbindung die zweitgrößte im Trennmittel oder die gleiche wie die Menge der ersten C30-C50-Alkylmonoesterverbindung ist,
wobei die Menge der ersten C30-C50-Alkylmonoesterverbindung 30 Massen-% oder mehr, aber weniger als 50 Massen-%, bezogen auf das Trennmittel, beträgt,
wobei die Menge der zweiten C30-C50-Alkylmonoesterverbindung 10 Massen-% oder mehr, aber weniger als 50 Massen-%, bezogen auf das Trennmittel, beträgt und
wobei der Unterschied zwischen der Anzahl an Kohlenstoffatomen der ersten C30-C50-Alkylmonoesterverbindung und der Anzahl an Kohlenstoffatomen der zweiten C30-C50-Alkylmonoesterverbindung 4 bis 8 als Absolutwert beträgt.

2. Toner nach Anspruch 1, wobei die Gesamtmenge der ersten C30-C50-Alkylmonoesterverbindung und der zweiten C30-C50-Alkylmonoesterverbindung 90 Massen-% oder mehr, bezogen auf das Trennmittel, beträgt.

3. Toner nach Anspruch 1 oder 2, wobei das Trennmittel ferner eine dritte C30-C50-Alkylmonoesterverbindung umfasst, deren Menge die drittgrößte im Trennmittel oder die gleiche wie die Menge der zweiten C30-C50-Alkylmonoesterverbindung ist, und wobei die Gesamtmenge der ersten C30-C50-Alkylmonoesterverbindung, der zweiten C30-C50-Alkylmonoesterverbindung und der dritten C30-C50-Alkylmonoesterverbindung 95 Massen-% oder mehr, bezogen auf das Trennmittel, beträgt.

4. Toner nach irgendeinem der Ansprüche 1 bis 3, umfassend Grundteilchen, die jeweils das Bindemittelharz und das Trennmittel enthalten, wobei die Grundteilchen ein Volumenmittel des Teilchendurchmessers (Dv) aufweisen, das 3,0 μm oder mehr, aber weniger als 6,0 μm beträgt.

5. Toner nach irgendeinem der Ansprüche 1 bis 4, wobei die Menge des Trennmittels 1 Massen-% bis 20 Massen-%, bezogen auf die Grundteilchen, beträgt.

6. Toner nach irgendeinem der Ansprüche 1 bis 5, wobei das Bindemittelharz einen modifizierten Polyester enthält.

7. Toner nach irgendeinem der Ansprüche 1 bis 6, wobei das Bindemittelharz einen kristallinen Polyester enthält.

8. Verfahren zur Herstellung des Toners nach irgendeinem der Ansprüche 1 bis 7, umfassend:

das Auflösen oder Dispergieren eines Trennmittels und mindestens eines von einem Polyester-Bindemittelharz und einer Polyester-Bindemittelharz-Vorstufe, die eine Esterbindung enthält, in einem organischen Lösungsmittel, um dadurch eine Tonermaterial-Flüssigkeit herzustellen,
das Emulgieren oder Dispergieren der Tonermaterial-Flüssigkeit in einem wässrigen Medium, um eine Emulsions- oder Dispersionsflüssigkeit herzustellen, und
das Entfernen des organischen Lösungsmittels aus der Emulsions- oder Dispersionsflüssigkeit, um Grundteilchen zu bilden.

9. Bilderzeugungsverfahren, umfassend:

das Laden einer Oberfläche auf einem Bildträgerelement,
das Belichten der geladenen Oberfläche des Bildträgerelements, um ein latentes elektrostatisches Bild auf dem Bildträgerelement zu erzeugen,
das Entwickeln des latenten elektrostatischen Bildes, das auf dem Bildträgerelement erzeugt worden ist, mit einem Entwickler, der einen Toner enthält, um ein Tonerbild auf dem Bildträgerelement zu bilden,

das Übertragen des Tonerbilds auf ein Aufzeichnungsmedium und
das Fixieren des übertragenen Tonerbilds auf dem Aufzeichnungsmedium,
wobei der Toner der Toner nach irgendeinem der Ansprüche 1 bis 7 ist.

## Revendications

1. Toner comprenant :

   un polyester en tant que résine liante, et
   un agent de libération,
   dans lequel l'agent de libération comprend un premier composé de monoester alkyle C30 - C50 et un deuxième composé de monoester alkyle C30 - C50,
   dans lequel le nombre d'atomes de carbone du premier composé de monoester alkyle C30 - C50 est différent du nombre d'atomes de carbone du deuxième composé de monoester alkyle C30 - C50,
   dans lequel la quantité du premier composé de monoester alkyle C30 - C50 est la plus importante dans l'agent de libération et la quantité du deuxième composé de monoester alkyle C30 - C50 est la seconde la plus importante dans l'agent de libération ou identique à la quantité du premier composé de monoester alkyle C30 - C50,
   dans lequel la quantité du premier composé de monoester alkyle C30 - C50 est de 30 % en poids ou supérieure mais inférieure à 50 % en poids par rapport à l'agent de libération,
   dans lequel la quantité du deuxième composé de monoester alkyle C30 - C50 est de 10 % en poids ou supérieure, mais inférieure à 50 % en poids par rapport à l'agent de libération, et
   dans lequel la différence entre le nombre d'atomes de carbone du premier composé de monoester alkyle C30 - C50 et le nombre d'atomes de carbone du deuxième composé de monoester alkyle C30 - C50 est de 4 à 8 en tant que valeur absolue.

2. Toner selon la revendication 1, dans lequel la quantité totale du premier composé de monoester alkyle C30 - C50 et du deuxième composé de monoester alkyle C30 - C50 est de 90 % en poids ou supérieure par rapport à l'agent de libération.

3. Toner selon la revendication 1 ou 2, dans lequel l'agent de libération comprend un troisième composé de monoester alkyle C30 - C50 dont la quantité est la troisième la plus importante dans l'agent de libération ou identique à la quantité du deuxième composé de monoester alkyle C30 - C50, et dans lequel la quantité totale du premier composé de monoester alkyle C30 - C50, du deuxième composé de monoester alkyle C30 - C50 et du troisième composé de monoester alkyle C30 - C50 est de 95 % en poids ou supérieure par rapport à l'agent de libération.

4. Toner selon l'une quelconque des revendications 1 à 3, comprenant des particules de base contenant chacune la résine liante et l'agent de libération, dans lequel les particules de base ont un diamètre de particule moyen en volume (Dv) qui est de 3,0 μm ou supérieur mais inférieur à 6,0 μm.

5. Toner selon l'une quelconque des revendications 1 à 4, dans lequel la quantité d'agent de libération est de 1 % en poids à 20 % en poids par rapport aux particules de base.

6. Toner selon l'une quelconque des revendications 1 à 5, dans lequel la résine liante contient un polyester modifié.

7. Toner selon l'une quelconque des revendications 1 à 6, dans lequel la résine liante contient un polyester cristallin.

8. Procédé pour produire le toner selon l'une quelconque des revendications 1 à 7, comprenant les étapes suivantes :

   dissoudre ou disperser, dans un solvant organique, un agent de libération et au moins l'un parmi une résine liante à base de polyester et un précurseur de résine liante à base de polyester contenant une liaison d'ester, pour préparer ainsi un liquide de matériau de toner,
   émulsifier ou disperser le liquide de matériau de toner dans un milieu aqueux pour préparer un liquide d'émulsion ou de dispersion, et
   retirer le solvant organique du liquide d'émulsion ou de dispersion afin de former des particules de base.

9. Procédé de formation d'image comprenant les étapes suivantes :

charger une surface d'un élément de support d'image,
exposer la surface chargée de l'élément de support d'image, à la lumière, afin de former une image électrostatique latente sur l'élément de support d'image,
développer l'image électrostatique latente formée sur l'élément de support d'image avec un révélateur contenant un toner afin de former une image de toner sur l'élément de support d'image,
transférer l'image de toner sur un milieu d'enregistrement, et
fixer l'image de toner transférée sur le milieu d'enregistrement,
dans lequel le toner est le toner selon l'une quelconque des revendications 1 à 7.

FIG. 1

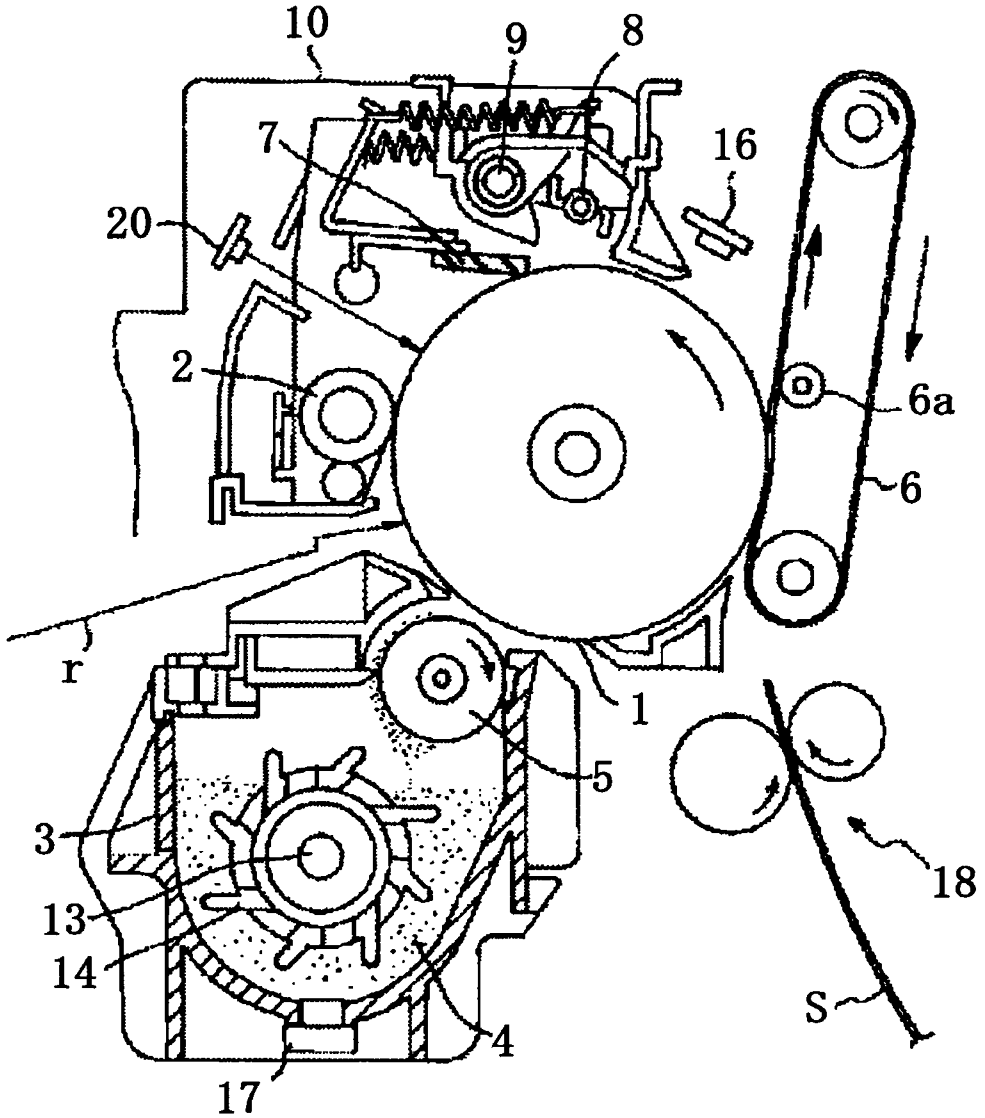

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7152202 A
- JP 4284005 B
- JP 11149179 A
- JP 2010002901 A
- JP 3287733 B
- EP 1813992 A2
- JP 2005215255 A
- JP 2002023424 A
- EP 1223474 A2